# EUROPEAN PATENT SPECIFICATION

(11) **EP 4 543 358 B1**
(45) Date of publication and mention of the grant of the patent: **20.05.2026**
(21) Application number: 23744337.9
(22) Date of filing: 27.06.2023
(51) Int. Cl.: A61C 7/08, A61C 7/00

(54) **ORTHO-RESTORATIVE TREATMENT PLANNING**
PLANUNG EINER ORTHO-RESTORATIVEN BEHANDLUNG
PLANIFICATION DE TRAITEMENT ORTHO-RESTAURATIF

(30) Priority: 27.06.2022 US 202263356025 P
(43) Date of publication of application: 30.04.2025
(73) Proprietor: Align Technology, Inc., San Jose, CA 95134 (US)
(72) Inventor: SUN, Zhaonan, San Jose, California 95134 (US); WANG, Yuxiang, San Jose, California 95134 (US); NISHIMUTA, James, San Jose, California 95134 (US); VALDIVIESO CASIQUE, Manlio Fabio, San Jose, California 95134 (US); SATO, Jun, San Jose, California 95134 (US); GERTH, Maik, San Jose, California 95134 (US); STEINBRECHER, Tillmann, San Jose, California 95134 (US)
(74) Representative: Carpmaels & Ransford LLP
(86) International application number: PCT/US2023/069161
(87) International publication number: WO 2024/006753

(56) References cited:
- US-A1- 2009 291 407
- US-A1- 2011 159 451

## Description

### BACKGROUND

A document in the art is exemplified by US 2009/291407 A1.

Orthodontic treatments using a series of patient-removable appliances (e.g., "aligners") are useful for treating patients, and in particular for moving a patient's teeth to positions where function and/or aesthetics are optimized. Treatment planning is typically performed in conjunction with the dental professional (e.g., dentist, orthodontist, dental technician, etc.) by generating a model of the patient's teeth in a final configuration, and then breaking a treatment plan into a number of intermediate stages (steps) corresponding to individual appliances that are worn sequentially. This process may be interactive, adjusting the staging and in some cases the final target position, based on constraints on the movement of the teeth and the dental professional's preferences. Once the final treatment plan is finalized, the series of aligners may be manufactured corresponding to the treatment planning.

In some cases, patients may also need restorative dental treatments. Restorative dental treatments generally focus on the rehabilitation of the health and function of a patient's dentition. Often, these goals are also accompanied by aesthetic requirements of the patient. Generally, the goal is to restore or obtain healthy function of the teeth, jaws, and gingiva while restoring a look, shape, and feel of natural teeth. Restorative treatments may include repairing damaged teeth with dental filling and/or bonding material; restoring parts of teeth with inlays, onlays, crowns, or fillings; and replacing teeth with more extensive restorations such as prosthetic teeth, bridges, or dentures. Restorative treatments may also include using bite adjustment devices to correct a patient's and/or alleviate symptoms associated with temporomandibular disorders (TMD).

The addition of restorative treatments may complicate orthodontic treatment planning by affecting the final target dentition, as well as the treatment path through the intermediate stages of an orthodontic treatment plan. For example, a restorative treatment may change a bite pattern and/or associated jaw positioning of the patient, and thus may affect the orthodontic treatment plan. It would be beneficial to factor in any expected changes due to the addition of a restorative treatment with orthodontic tooth movements during treatment. Further, the patient may experience changes in the feel of their dentition once a restorative treatment is implemented, which may cause discomfort if implemented too quickly. Thus, it may be beneficial to integrate a gradual shift in the orthodontic treatment to account for restorative features.

### SUMMARY

The invention is defined by the appended independent claims 1, 11 and 14.

The methods and apparatuses described herein are generally to the field of orthodontics, and more particularly to orthodontic treatments that involve restorative dental treatments. Described herein are methods and apparatuses (e.g., systems and devices, including software/firmware and/or hardware) for implementing ortho-restorative treatment plans that involve orthodontic treatments for reposition teeth to correct mal-positioned teeth and that also account for changes in a patient's dentition due to restorative dental treatments. Systems may include software analysis tools for determining or modifying an orthodontic treatment plan for a particular patient's dental condition. The methods may be part of a method of generating and/or executing a dental treatment plan.

Methods described herein may involve generating a target dentition based on a patient's pre-treatment dentition and desired final positions of one or more teeth. The target dentition may be based correcting mal-positioned teeth and/or jaws and/or misaligned bite patterns. The orthodontic treatment may involve a restorative dental treatment where one or more restorative features (e.g., filling, bonding material, veneer, bite modification feature, inlay, onlay, crown, prosthetic tooth, bridge, denture, and/or gingival implant) is added to the patient's dentition. The treatment plan may consider any restorative feature(s) when planning the intermediate stages of the treatment plan, thereby providing a more reliable outcome and/or improving patient comfort during implementation of the treatment plan.

In some examples, the orthodontic treatment involves the use of a series of dental appliances (e.g., aligners) that are configured to urge the teeth from an initial configuration to a target configuration in a stepwise fashion. The dental devices may be modified to account for one or more restorative features that are expected to be implemented on the patient's teeth, for example, after orthodontic treatment has been completed. In some cases, the restorative treatment is implemented during the orthodontic treatment. In some cases, the restorative treatment involves the use of the dental appliances (e.g., aligners) themselves.

According to one aspect, a method of generating an ortho-restorative treatment plan for a patient's dentition comprises: generating a treatment plan for repositioning one or more teeth from an initial position of an initial dentition model toward a target position of a target dentition model, wherein generating the treatment plan comprises generating intermediate dentition models corresponding to stages along a treatment path, wherein the intermediate dentition models comprise: a first intermediate dentition model corresponding to a first stage of the treatment plan, wherein the first intermediate dentition model includes a first intermediate restorative feature arranged at a location corresponding to a location for a planned dental restoration on the patient's dentition, wherein the first intermediate restorative feature has a first size that is smaller than a size of the planned dental restoration, and a second intermediate dentition model corresponding to a second stage of the treatment plan, wherein the second intermediate dentition model includes a second intermediate restorative feature arranged at the location corresponding to the location for the planned dental restoration on the patient's dentition, wherein the second intermediate restorative feature has a second size that is larger than the first size of the first intermediate restorative feature and smaller than the size of the planned dental restoration.

In some examples, the planned dental restoration may comprise one or more of a filling, a bonding material, a veneer, a bite adjustment feature, an inlay, an onlay, a crown, a prosthetic tooth, a bridge, dentures, and a gingival implant.

In some examples, the method may further comprise forming a first intermediate aligner model that is configured to implement the first stage of the treatment plan, and forming a second intermediate aligner model that is configured to implement the second stage of the treatment plan.

In some examples, the method may further comprise forming a first and second physical intermediate aligners corresponding to the first and second intermediate aligner models.

In some examples, the method may further comprise morphing the first intermediate aligner model to include the first intermedial restorative feature, and morphing the second intermediate aligner model to include the second intermedial restorative feature.

In some examples, the method may further comprise morphing the first intermediate dentition model to include the first intermedial restorative feature, and morphing the second intermediate dentition model to include the second intermedial restorative feature.

In some examples, the first and second intermediate dentition models may be virtual three-dimensional (3D) models.

In some examples, the first intermediate restorative feature may be on an occlusal surface of one or more teeth of the first intermediate dentition model, and the second intermediate restorative feature may be on an occlusal surface of one or more teeth of the second intermediate dentition model.

In some examples, the first intermediate restorative feature may be on a buccal surface of one or more teeth of the first intermediate dentition model, and the second intermediate restorative feature may be on a buccal surface of one or more teeth of the second intermediate dentition model.

In some examples, the first intermediate restorative feature may have a lesser thickness than the second intermediate restorative feature.

In some examples, the method may further comprise forming an anchor model on each of the first and second intermediate dentition models, the anchor model corresponding to an anchor configured to cooperate with a corresponding aligner model to achieve movement of one or more teeth in a desired direction.

In some examples, the first intermediate restorative feature may be integrated into the first intermediate aligner model, and the second intermediate restorative feature may be integrated into the second intermediate aligner model, wherein each of the first and second intermediate restorative features may have a different color than a majority of the corresponding first and second intermediate aligner models.

According to another aspect, a non-transient, computer-readable medium contains program instructions to generate an ortho-restorative treatment plan, the program instructions configured to cause a processor to: generate a treatment plan for repositioning one or more teeth from an initial position of an initial dentition model toward a target position of a target dentition model, wherein generating the treatment plan comprises generating intermediate dentition models corresponding to stages along a treatment path, wherein the intermediate dentition models comprise: a first intermediate dentition model corresponding to a first stage of the treatment plan, wherein the first intermediate dentition model includes a first intermediate restorative feature arranged at a location corresponding to a location for a planned dental restoration on the patient's dentition, wherein the first intermediate restorative feature has a first size that is smaller than a size of the planned dental restoration, and a second intermediate dentition model corresponding to a second stage of the treatment plan, wherein the second intermediate dentition model includes a second intermediate restorative feature arranged at the location corresponding to the location for the planned dental restoration on the patient's dentition, wherein the second intermediate restorative feature has a second size that is larger than the first size of the first intermediate restorative feature and smaller than the size of the planned dental restoration.

In some examples, the program instructions may be further configured to cause the processor to form a first intermediate aligner model that is configured to implement the first stage of the treatment plan, and to form a second intermediate aligner model that is configured to implement the second stage of the treatment plan.

In some examples, the program instructions may be further configured to cause the processor to output instructions for forming a first physical intermediate aligner corresponding to the first intermediate aligner model, and for forming a second physical intermediate aligner corresponding to the second intermediate aligner model.

In some examples, the planned dental restoration may comprise one or more of a filling, a bonding material, a veneer, a bite adjustment feature, an inlay, an onlay, a crown, a prosthetic tooth, a bridge, dentures, and a gingival implant.

According to a further aspect, an ortho-restorative treatment system comprises: a series of aligners configured to implement an ortho-restorative treatment plan on a patient's dentition, wherein the series of aligners comprises: a first aligner having walls that are configured to apply a first repositioning force on one or more teeth of the patient's dentition in accordance a first stage of the ortho-restorative treatment plan, the first aligner including a first intermediate restorative feature, wherein when the first aligner worn, first intermediate restorative feature is arranged to be positioned at a location on the patient's dentition for a planned dental restoration, wherein the first intermediate restorative feature has a first size that is smaller than a size of the planned dental restoration; and a second aligner having walls that are configured to apply a second repositioning force on the one or more teeth of the patient's dentition in accordance a second stage of the ortho-restorative treatment plan, the second aligner including a second intermediate restorative feature, wherein when the second aligner worn, second intermediate restorative feature is arranged to be positioned at the location on the patient's dentition for the planned dental restoration, wherein the second intermediate restorative feature has a second size that is larger than the first sized of the first intermediate restorative feature and smaller than the size of the planned dental restoration.

In some examples, the first intermediate restorative feature may have a first thickness that is less than a thickness of the planned dental restoration, and the second intermediate restorative feature may have a second thickness that is greater than the first intermediate restorative feature and less than the thickness of the planned dental restoration.

In some examples, the planned dental restoration may be a veneer, a filling, a bonding material, an inlay, an onlay, a crown, a prosthetic tooth, a denture, a bridge, a gingival implant or a palatal implant.

According to another aspect, a method of generating an ortho-restorative treatment plan for treating or preventing temporomandibular disorder (TMD) comprises: generating a treatment plan for implementing a treatment plan on a patient's dentition and to adjust the patient's bite toward a desired bite position, wherein generating the treatment plan comprises generating intermediate dentition models corresponding to stages along a treatment path; and generating intermediate aligner models configured to implement the stages of the treatment plan, wherein the intermediate aligner models comprise: a first intermediate aligner model configured to apply a first repositioning force on a first intermediate dentition model in accordance with a first stage of the treatment plan, the first intermediate aligner model including a first bite adjustment feature having a first height, wherein the first intermediate aligner model is configured to modify the patient's bite by a first amount toward the desired bite position; and a second intermediate aligner model configured to apply a second repositioning force on a second intermediate dentition model in accordance with a second stage of the treatment plan, the second intermediate aligner model including a second bite adjustment feature having a second height greater than the first height, wherein the second intermediate aligner model is configured to modify the patient's bite by a second amount toward the desired bite position, the second amount greater than the first amount.

In some examples, the first bite adjustment feature may be on an occlusal wall of the first intermediate aligner model, and the second bite adjustment feature may be on an occlusal wall of the second intermediate aligner model.

In some examples, the method may further comprise forming a first intermediate aligner corresponding to the first intermediate aligner model, and forming a second intermediate aligner corresponding to the second intermediate aligner model.

In some examples, occlusal surfaces of the first intermediate aligner model may be shaped in accordance with occlusal surfaces of the first intermediate dentition model, and occlusal surfaces of the second intermediate aligner model may be shaped in accordance with occlusal surfaces of the second intermediate dentition model.

In some examples, occlusal surfaces of the first and second intermediate aligner models may be substantially flat.

In some examples, at least one of the first and second bite adjustment features may span occlusal surfaces of more than one tooth of the corresponding first and second intermediate dentition models.

In some examples, at least one of the first and second bite adjustment features may span only on occlusal surface of the corresponding first and second intermediate dentition models.

In some examples, each of the first and second intermediate aligner models may include more than one bite adjustment feature.

In some examples, each of the first and second intermediate aligner models may include only one bite adjustment feature.

In some examples, the first and second intermediate aligner models may be virtual three-dimensional (3D) models.

In some examples, the first and second bite adjustment features may include one or more of an occlusal splint, a mandibular advancement block, a buccal mandibular advancement wing, and a tooth-shaped aligner feature.

According to a further aspect, a non-transient, computer-readable medium contains program instructions to generate an ortho-restorative treatment plan for treating or preventing temporomandibular disorder (TMD), the program instructions configured to cause a processor to: generate a treatment plan for implementing a treatment plan on a patient's dentition and to adjust the patient's bite toward a desired bite position, wherein generating the treatment plan comprises generating intermediate dentition models corresponding to stages along a treatment path; and generate intermediate aligner models configured to implement the stages of the treatment plan, wherein the intermediate aligner models comprise: a first intermediate aligner model configured to apply a first repositioning force on a first intermediate dentition model in accordance with a first stage of the treatment plan, the first intermediate aligner model including a first bite adjustment feature having a first height, wherein the first intermediate aligner model is configured to modify the patient's bite by a first amount toward the desired bite position; and a second intermediate aligner model configured to apply a second repositioning force on a second intermediate dentition model in accordance with a second stage of the treatment plan, the second intermediate aligner model including a second bite adjustment feature having a second height greater than the first height, wherein the second intermediate aligner model is configured to modify the patient's bite by a second amount toward the desired bite position, the second amount greater than the first amount.

In some examples, the first and second bite adjustment features may include one or more of an occlusal splint, a mandibular advancement block, a buccal mandibular advancement wing, and a tooth-shaped aligner feature.

In some examples, the program instructions may further be configured to cause the processor to output instructions for forming a first physical intermediate aligner corresponding to the first intermediate aligner model, and for forming a second physical intermediate aligner corresponding to the second intermediate aligner model.

In some examples, the second intermediate aligner model may be configured to provide a space between an inner surface of the second intermediate aligner model and an occlusal surface of a corresponding tooth of the second intermediate dentition model.

In some examples, the space may be configured to be in fluid communication with the patient's oral cavity.

In some examples, a second occlusal wall of the second intermediate aligner model may have a greater thickness than a first occlusal wall of the first intermediate aligner model.

In some examples, walls of each of the first and second intermediate aligner models may have a uniform thickness.

According to another aspect, a bite adjustment system comprises: a series of aligners configured to implement a treatment plan on a patient's dentition and to adjust the patient's bite toward a desired bite position, wherein the series of aligners comprises: a first aligner having cavities configured to accept teeth of patient's dentition, wherein the first aligner is configured to apply a first repositioning force on one or more teeth of the patient's dentition in accordance a first stage of the treatment plan, the first aligner including a first bite adjustment feature on an occlusal surface of at least one of the cavities of the first aligner, the first bite adjustment feature having a first height, wherein when the first aligner is worn, the first bite adjustment feature is configured to modify the patient's bite by a first amount toward the desired bite position; and a second aligner having cavities configured to accept the teeth of patient's dentition, wherein the second aligner is configured to apply a second repositioning force on the one or more teeth of the patient's dentition in accordance a second stage of the treatment plan, the second aligner including a second bite adjustment feature on an occlusal surface of at least one of the cavities of the second aligner, the second bite adjustment feature having a second height greater than the first height, wherein when the second aligner is worn, the second bite adjustment feature is configured to modify the patient's bite by a second amount toward the desired bite position, the second amount greater than the first amount.

In some examples the second aligner may be configured to provide a space between an inner surface of the at least one of the cavities of the second aligner and an occlusal surface of a corresponding tooth of the patient.

In some examples, the space may be configured to be in fluid communication with the patient's oral cavity.

In some examples, a second occlusal wall of the second aligner may have a greater thickness than a first occlusal wall of the first aligner.

In some examples, walls of each of the first and second aligners may have a uniform thickness.

In some examples, the first and second bite adjustment features may include one or more of an occlusal splint, a mandibular advancement block, a buccal mandibular advancement wing, and a tooth-shaped aligner feature.

In general, described herein are methods, including method of generating a series of aligners for an ortho-restorative treatment plan for a patient's dentition. These methods may include: generating a treatment plan for repositioning the patient's teeth from an initial configuration to a target final configuration, wherein the final target position comprises a restorative region configured to hold a restorative feature to be attached to the patient's dentition; generating a plurality of intermediate stages corresponding to a series of dental aligners to be worn to transition the patient's teeth from the initial configuration to the target final configuration, wherein an outer surface of each sequential stage of the plurality of intermediate stages approximating the restorative region is progressively morphed from the initial configuration to a modified version of the final target position that includes the restorative feature; and generating the series of dental aligners based on the plurality of intermediate stages.

In any of these methods and apparatuses, the planned dental restoration may comprise one or more of a filling, a bonding material, a veneer, a bite adjustment feature, an inlay, an onlay, a crown, a prosthetic tooth, a bridge, dentures, and a gingival implant.

Any of these methods may include forming the series of dental aligners, e.g., by an additive manufacturing technique. In any of these methods and apparatuses, the region of the dental aligner corresponding to the outer surface of each sequential stage of the plurality of intermediate stages approximating the restorative region may have an increasing thickness. At least some of the aligners of the series of dental aligners may include a model of the restorative feature integrated into the dental aligner, further wherein the model of the restorative feature has a different color, texture or transparency than the majority of the dental aligner.

As mentioned above, any of these methods may be configured as a non-transient, computer-readable medium containing program instructions. For example, described herein are non-transient, computer-readable medium containing program instructions to generate a series of aligners for an ortho-restorative treatment plan, the program instructions configured to cause a processor to: generate a treatment plan for repositioning the patient's teeth from an initial configuration to a target final configuration, wherein the final target position comprises a restorative region configured to hold a restorative feature to be attached to the patient's dentition; generate a plurality of intermediate stages corresponding to a series of dental aligners to be worn to transition the patient's teeth from the initial configuration to the target final configuration, wherein an outer surface of each sequential stage of the plurality of intermediate stages approximating the restorative region is progressively morphed from the initial configuration to a modified version of the final target position that includes the restorative feature; and transmit instructions for forming the series of dental aligners based on the plurality of intermediate stages. The instructions may be transmitted for storage and later fabrication, for immediate fabrication, or both. For example, the program instructions may be further configured to form the series of dental aligners from the transmitted instructions.

These and other aspects and details are described herein.

### BRIEF DESCRIPTION OF THE DRAWINGS

Novel features of embodiments described herein are set forth with particularity in the appended claims. A better understanding of the features and advantages of the embodiments may be obtained by reference to the following detailed description that sets forth illustrative embodiments and the accompanying drawings.
FIGS. 1A-1F illustrate top-down section views of a tooth model, showing aspects of an example process of generating an ortho-restorative treatment plan and dental devices.
FIGS. 2A-2B illustrate top-down section views of an example virtual aligner and physical aligner, illustrating a variation of a portion of the process of FIGS. 1A-1F.
FIGS. 3A-3B illustrate top-down section views of an example virtual aligner and physical aligner, illustrating a variation of the process of FIGS. 2A-2B.
FIGS. 4A-4D illustrate top-down section views of a tooth model, showing aspects of an example process of generating an ortho-restorative treatment plan and dental devices where at least one aligner includes a restorative feature.
FIGS. 5A-5C illustrate side views of the human jaw showing how an aligner may correct the jaw relation by redefining the constraining contacts.
FIGS. 6A-6J illustrate side section views of a tooth model, showing aspects of an example process of generating an ortho-restorative treatment plan that includes bite adjustment features.
FIGS. 6K-6O illustrate alternative side section views of a tooth model, showing aspects of an example process of generating an ortho-restorative treatment plan that includes bite adjustment features.
FIG. 7 is a flowchart illustrating an example process for generating an ortho-restorative treatment plan.
FIG. 8 is a diagram showing example aspects of an ortho-restorative treatment planning tool.
FIG. 9 illustrates a perspective view of an example aligner having a flat occlusal plane splint.
FIG. 10 illustrates perspective views of example occlusal mandibular advancement blocks: a) shows an aligner with reserved space for mandibular advancement blocks, b) shows placement of mandibular advancement blocks in a 3D model of a dentition; and c) shows mandibular advancement blocks that have been manufactured.
FIG. 11 illustrates a side view of example buccal mandibular advancement wings on a 3D model of a dentition.
FIG. 12 illustrates perspective views of example teeth-shaped aligner features configured to correct malocclusion while worn on a patient's dentition.

### DETAILED DESCRIPTION

The methods and apparatuses described herein relate to orthodontic treatment plans that involve one or more restorative dental treatments, and thus may be referred to as ortho-restorative treatment plans. The methods may involve manipulating models of the patient's dentition to include restorative features corresponding to anticipated dental restorations that will be added to the patient's dentition during and/or after orthodontic treatment for repositioning one or more teeth. Examples of dental restorations may include a filling, a bonding material, a veneer, a bite modification feature (e.g., TMD feature), an inlay, an onlay, a crown, a prosthetic tooth, a bridge, a denture, and/or a gingival implant, among others.

Methods may involve forming a series of orthodontic appliances (e.g., aligners, retainers and/or braces) for repositioning teeth from an initial tooth arrangement to a target tooth arrangement. Repositioning of the teeth may be implemented in accordance with a prescribed treatment plan for moving the teeth from the initial arrangement toward the target arrangement over a period of time. The treatment plan is typically partitioned into multiple incremental intermediate stages, typically with one aligner associated with each stage. For example, a treatment plan that includes 25 stages may involve the use of 25 aligners. An aligner associated with a particular stage of the treatment plan is configured to move the teeth from a first arrangement at the beginning of the particular stage toward a second arrangement at the end of the particular stage.

The treatment plan may be represented by one or more models of the patient's dentition. For example, an initial dentition model may represent the patient's dentition prior to treatment, a target dentition model may represent a desired target dentition at the end of treatment, and one or more intermediate dentition models may represent the dentition at intermediate stage(s) of the treatment. Once the dentition models are generated, aligners models configured to move the teeth according to each of the dentition models may be formed. For example, intermediate aligner models may be formed based on each of the intermediate dentition models. In some cases, a final aligner model may be formed based on the target dentition model.

The dentition models and/or aligner models may be virtual (e.g., digital) models, which are viewable and manipulatable using one or more computers. In some cases, the dentition models are virtual three-dimensional (3D) models of the patient's dentition. Typically, an initial 3D model of the patient's dentition is obtained based on a scan of the patient's dentition using a dental scanner. A target 3D model representing a desired configuration of the patient's teeth may be determined based on desired changes from the initial 3D model. Virtual 3D models of aligners may be formed based on 3D dentition models. For example, an aligner model may be virtually formed to fit over a dentition model such that the aligner model has cavities with interior surfaces shaped in accordance with outer surfaces of at least a portion of the teeth of the dentition model.

Physical aligners may be then formed based on the virtual aligner models (e.g., via molding or additive manufacturing). Each of the physical aligners may include a polymeric shell that is configured to be removably placed over the patient's dental arch, and which has cavities with inner surfaces shaped to accept the teeth of the dental arch. Walls of the cavities may be shaped and sized to apply repositioning forces on one or more teeth of the dental arch in accordance a stage of the ortho-restorative treatment plan.

Each stage of the treatment plan may be associated with two dentition models. For example, a first treatment stage may be associated with a first intermediate dentition model representing the dentition at the beginning of the first treatment stage and second intermediate dentition model representing the dentition at the end of the first treatment stage. A first aligner associated with the first stage may be formed based on the second intermediate dentition model. A second treatment stage may be associated with the second intermediate dentition model representing the dentition at the beginning of the second treatment stage and third intermediate dentition model representing the dentition at the end of the second treatment stage. A second aligner associated with the second stage may be formed based on the third intermediate dentition model. The total number of treatment stages and aligners may vary depending on the treatment plan.

The methods and devices described herein may involve a step-by-step modification of orthodontic appliances (e.g., aligners) to accommodate restorative features. This may involve an incremental modification (also referred to as morphing) of virtual teeth and/or virtual restorative features into a final virtual model of restored teeth. The goals may include: 1) moving the patient's teeth from the original target to a desired location through the use of the orthodontic tools; and 2) creating a physical simulation of the final restored teeth in the patient mouth so that the patient and their jaw/mandibular joints can get used to the future restored teeth in their final form.

In some cases, the restored teeth may have a different size (e.g., height, thickness) and/or shape than the original teeth, depending on the kind of restoration. For example, though the crowns, veneers, some bite adjustment features, and some implants may increase a size of one or more teeth in one dimension.

In some cases, the methods may not affect the workflow of production of the dental appliances (e.g., aligners). For example, the production of a series of dental aligners in accordance with an orthodontic treatment plan may remain the same, and the changes may be implemented within one or more of the aligners themselves. Thus, the methods may be easily integrated into the production workflow. In some cases, dimensional aspects of the aligners, such as aligner thicknesses, may not be affected.

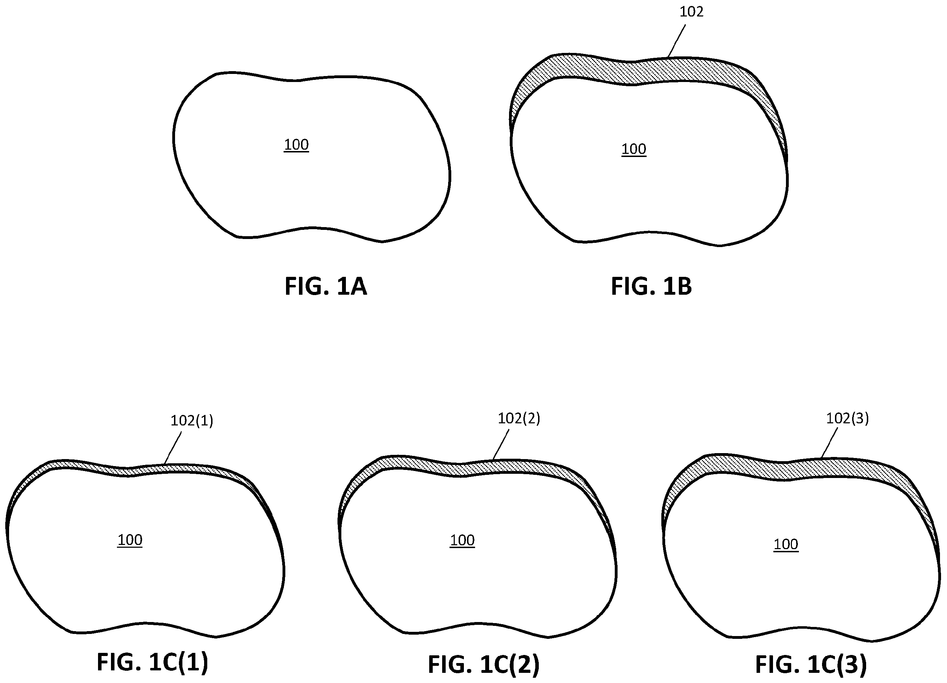

FIGS. 1A-1F illustrate aspects of an example process for forming a series of aligners based and an ortho-restorative treatment plan. FIG. 1A shows a top-down section view of an exemplary virtual model of a tooth 100 having an initial position (e.g., in three-dimensional space relative to a jaw) prior to orthodontic treatment. FIG. 1B shows the tooth 100 in a target position corresponding to a desired final position of the tooth 100 after the orthodontic treatment is complete. A virtual target restorative feature 102 is added to a surface (e.g., buccal surface) of the tooth 100 in the target position in FIG. 1B. The virtual target restorative feature 102 may be sized and shaped in accordance with an anticipated dental restoration. In this case, the dental restoration may correspond to a filling or veneer that is going to be put on the patient's tooth after the orthodontic treatment plan has been at least partially implemented. In some instances, the filling or veneer is configured to provide a cosmetic surface to a visible side of the tooth 100.

In some cases, restorative treatment may include modifying the tooth, such as by removing a portion of the tooth (e.g., a surface) to enhance bonding of the dental restoration to the tooth. In cases where the dental restoration is on an occlusal surface of the tooth, the occlusal surface of the tooth may be modified (e.g., resurfaced). Such tooth modifications (e.g., removing/resurfacing) may be accounted for in the tooth model 100.

As discussed above, the treatment may involve the use of a series of aligners that apply repositioning forces on a patient's teeth according to a series of stages of the treatment plan. In this example, the treatment plan involves three intermediate stages to achieve the target position of the tooth 100 (FIG. 1B). FIG. 1C(1) shows a first intermediate model of the tooth 100 in a first intermediate position after a first intermediate stage is implemented. FIG. 1C(2) shows a second intermediate model of the tooth 100 in a second intermediate position after a subsequent second intermediate stage is implemented. FIG. 1C(3) shows a third intermediate model of the tooth 100 in a third intermediate position after a subsequent third intermediate stage is implemented. In each intermediate stage, the tooth 100 is incrementally moved from the initial position (FIG. 1A) toward the target position (FIG. 1B).

In addition to the incremental positional changes of the tooth 100, a virtual intermediate restorative feature 102(1), 102(2) and 102(3) is added to each intermediate model FIGS. 1C(1), 1C(2), and 1C(3) of the tooth 100, respectively. In this case, the intermediate restorative features 102(1), 102(2) and 102(3) are located at the same location as target restorative feature 102 on the tooth 100 (FIG. 1B); however, the intermediate restorative features 102(1), 102(2) and 102(3) have different shapes and/or sizes than the target restorative feature 102 on the tooth 100 at the target position (FIG. 1B). For example, in this case, a third intermediate restorative feature 102(3) has a lesser thickness than the target restorative feature 102 on the tooth 100 at the target position (FIG. 1B), a second intermediate restorative feature 102(2) has a lesser thickness than the third intermediate restorative feature 102(3), and a first intermediate restorative feature 102(1) has a lesser thickness than the second intermediate restorative feature 102(2). Thus, the intermediate restorative features 102(1), 102(2) and 102(3) get progressively thicker as the treatment progresses until a final thickness is achieved at the target position (FIG. 1B).

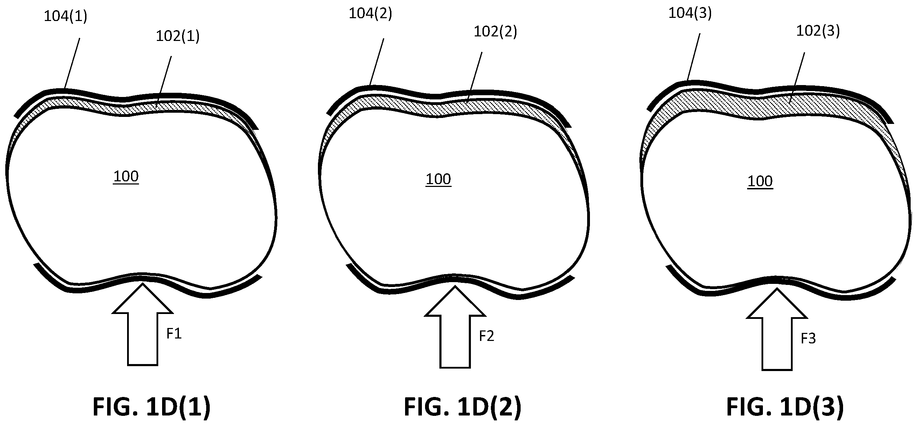

FIGS. 1D(1), 1D(2), and 1D(3) show virtual aligners 104(1), 104(2) and 104(3) formed around surfaces of each of the intermediate models FIGS. 1C(1), 1C(2), and 1C(3), respectively, of the tooth 100. The virtual aligners 104(1), 104(2) and 104(3) are each configured to apply a repositioning force F1, F2 and F3, respectively, on the virtual tooth 100 in accordance with the corresponding stage of the treatment plan. The repositioning forces F1, F2 and F3 applied to the tooth 100 may be a prescribed force (e.g., magnitude and direction) for moving the tooth 100 toward the target position as dictated by the corresponding stage of the treatment plan. The repositioning forces F1, F2 and F3 may be determined (e.g., computationally calculated) based on size and shape of the aligner material. The repositioning forces F1, F2 and F3 may be resilient forces based on predetermined resilient properties of a polymer material of the aligner. In addition, the internal surface of the cavity of each aligner 104(1), 104(2) and 104(3) has a shape that accommodates both the tooth 100 and corresponding intermediate restorative features 102(1), 102(2) and 102(3).

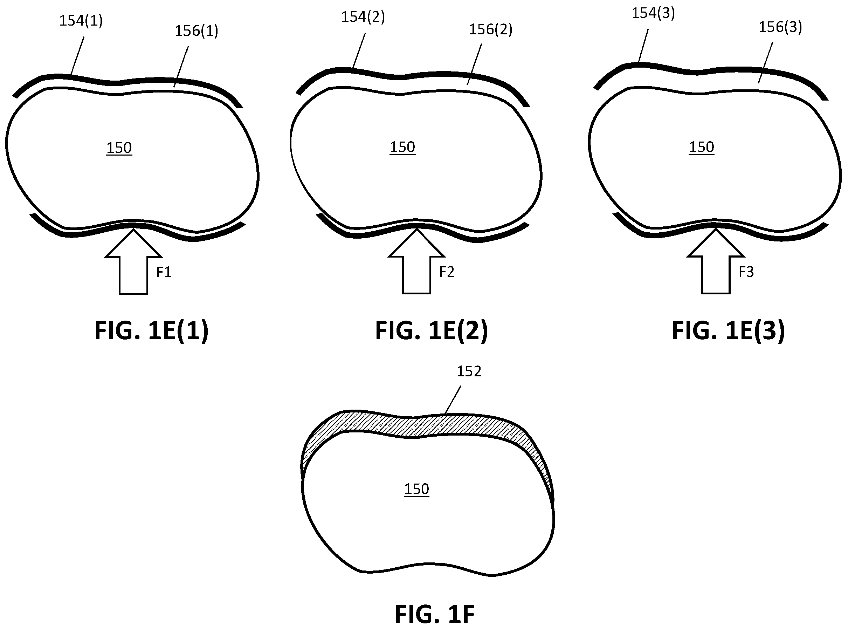

FIGS. 1E(1), 1E(2), and 1E(3) show the cavities of physical aligners 154(1), 154(2) and 154(3) over the patient's actual tooth 150 at each of the intermediate stages. The physical aligners 154(1), 154(2) and 154(3) may be manufactured according to the shapes and sizes dictated by the virtual aligners 104(1), 104(2) and 104(3) (e.g., CAD files). Any manufacturing techniques may be used, such as one or more molding and/or additive manufacturing (e.g., 3D printing) techniques. As shown, the physical aligners 154(1), 154(2) and 154(3) provide an intermediate restorative features 156(1), 156(2) and 156(3), respectively, between a surface (e.g., buccal surface) of the patient's tooth 150 and walls of the aligners 154(1), 154(2) and 154(3). In this example, the intermediate restorative features 156(1), 156(2) and 156(3) include open spaces (e.g., for gas (e.g., air) to reside). In some cases, the open spaces are in fluid communication with the inside of the patient's mouth so that air and/or the patient's oral fluid (e.g., saliva) may reside when the patient wears the aligners 154(1), 154(2) and 154(3).

As shown, a second intermediate restorative feature 156(2) of a second aligner 154(2) is larger (e.g., has a greater thickness) than a first intermediate restorative feature 156(1) of a first aligner 154(1). Likewise, a third intermediate restorative feature 156(3) of a third aligner 154(3) is larger (e.g., has a greater thickness) than a second intermediate restorative feature 156(2) of a second aligner 154(2). Thus, the treatment plan integrates any modifications brought about by the planned implementation of the restorative feature after at least a portion of the tooth repositioning according to the treatment plan is complete. Further, this incremental change in the shape and/or size of the aligners 154(1), 154(2) and 154(3) allows the patient to become gradual accustomed to the change in the outer surface shape and/or size of the aligners 154(1), 154(2) and 154(3) brought about by the expected addition of the dental restoration.

Once at least a portion of the treatment plan (e.g., repositioning by the aligners) has been completed, FIG. 1F shows a dental restoration 152 (having a shape corresponding to the virtual target restorative feature 102 in FIG. 1B) placed on (e.g., bonded to) the patient's physical tooth 150.

In some examples, the walls of each of the aligners 154(1), 154(2) and 154(3) may have a substantially uniform thickness. For example, the thickness of the walls the aligner 154(1) that apply the repositioning force F1 may be substantially the same as the thickness of the opposing walls of the aligner 154(1) for accommodating the first intermediate restorative feature 156(1).

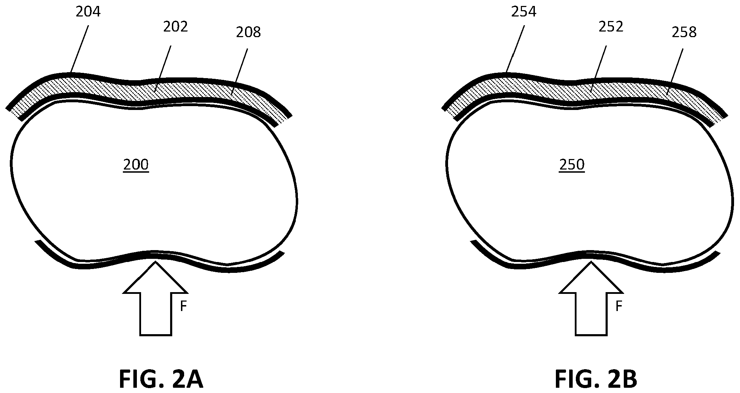

In some variations, one or more of the intermediate restorative features are integrated into the aligners. FIG. 2A illustrates top-down view of a cavity of a virtual aligner 204 placed on a virtual tooth 200. The aligner 204 may correspond to one of a series of aligners according to a treatment plan. The virtual aligner 204 includes a virtual intermediate restorative 202 integrated into a wall 208 of the aligner 204. In this case, integration of the intermediate restorative 202 increases a thickness of the wall 208.

FIG. 2B shows a physical aligner 254 fabricated based on the dimensions of the virtual aligner 204. The physical aligner 254 has an intermediate restorative 252 integrated into a wall 258 of the aligner 254. In some examples, the wall 258 is made of a same material as a remainder of the aligner 254 (e.g., polymer material(s)). In some examples, the wall 258 is made of a different material as a remainder of the aligner 254. For example, at least a portion of the wall 258 (e.g., where the intermediate restorative 252 is) may be made of a material having a different color than most of the remainder of the aligner 254. In some cases, the at least a portion of the wall 258 (e.g., where the intermediate restorative 252 is) may be tooth colored, whereas most of the remainder of the aligner 254 may be substantially visibly transparent (clear). In some examples, at least a portion of the wall 258 may include a material that is more rigid or more flexible than the remainder of the aligner 254.

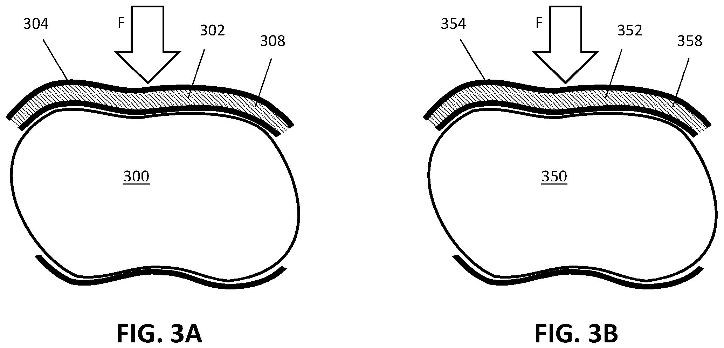

In the example of FIG. 2B, the aligner 254 is configured to apply a force F against a side of the tooth 250 that is opposite the side in which the thicker wall 258 is adjacent to. However, the aligners described herein may be configured to apply a repositioning force on one or more teeth in any of a number of directions. FIG. 3A illustrates a virtual aligner 304 that is a variation of the virtual aligner 204. As with the aligner 204, the aligner 304 may correspond to one of a series of aligners according to a treatment plan. Similar to the virtual aligner 204 (FIG. 2A), the virtual aligner 304 includes a virtual intermediate restorative 302 integrated into a wall 308 of the aligner 304, thereby making the wall 308 thicker than, for example, a wall of the aligner 304 at an opposite side of the tooth 300. In this variation, the virtual aligner 304 is configured to apply a repositioning force in a direction toward the same side of the tooth 300 as the thicker wall 308. FIG. 3B shows a physical aligner 354 manufactured in accordance with the virtual aligner 304 and configured to apply a force F against the patient's physical tooth 350 on the same side of the tooth 350 as the thicker wall 358 (having an intermediate restorative feature 352 integrated therein).

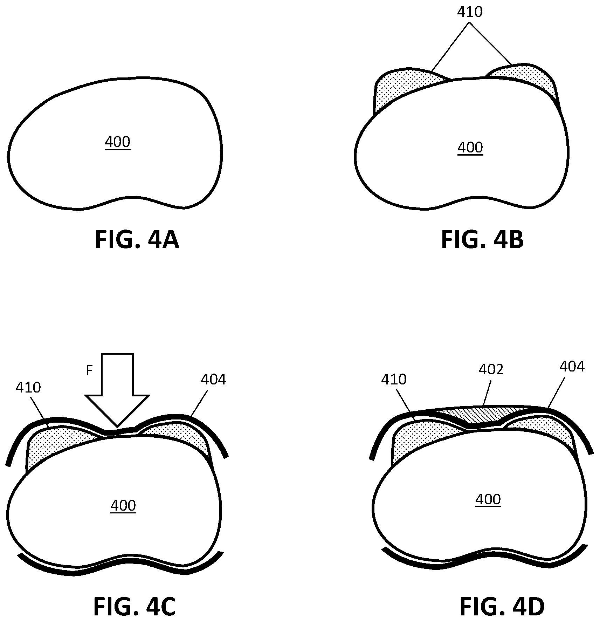

The methods, systems and devices described herein are not limited to restorative features that are added to the patient's dentition. In some examples, the restorative features may be added to the aligners themselves (e.g., without an anticipated dental restoration to the patient's dentition). FIGS. 4A-4D illustrate such an example. FIG. 4A shows a top-down section view of a virtual tooth 400. FIG. 4B shows a virtual anchor 410 placed on a surface (e.g., buccal surface) of the tooth 400. The anchor 410 may be configured to provide one or more anchor points against which an aligner may apply a repositioning force. In some examples, the anchor 410 includes one or more dental attachments. The anchor 410 protrudes from the surface of the tooth 400, which may enhance the anchoring capability of the anchor 410. In some cases, the anchor 410 is used in combination with other restorative features, such as described with reference to FIGS. 1A-1F, 2A-2B and 3A-3B.

FIG. 4C shows a cavity of a virtual aligner 404 placed around the tooth 400 and the anchor 410. The aligner 404 is configured to engage with and cooperate with the anchor 410 to apply a repositioning force F against the tooth 400 in accordance with a stage in an orthodontic treatment plan. As shown, the outer surface to the aligner 404 protrudes and is uneven due to the underlying anchor 410, which may cause discomfort for the patient.

FIG. 4D shows a virtual restorative feature 402 added to the outer surface of the aligner 404 at the location of the anchor 410. This may smooth out the outer surface of the aligner 404, thereby improving patient comfort. Additionally or alternatively, the restorative feature 402 may have a color that matches a color of the tooth 400, thereby visibly hiding the underlying anchor 410 for aesthetic purposes. A physical aligner having a physical restorative feature may be manufactured based on the virtual aligner 404 and the virtual restorative feature 402, as described herein.

### Temporomandibular Disorders (TMD)

TMD is a term generally used to describe a number of conditions characterized by signs and symptoms of the temporomandibular joint (TMJ) and/or the masticatory muscles. TMD may be generally categorized into two types of disorders: those relating to the TMJ, and those relating to the masticatory neuromuscular system. The pathology of TMD may be complex, and current research indicates that many factors are associated with the disorder. Current recommendations for treatment involve holistic methods and the use of oral appliances, muscle therapy, behavioral therapy and/or medication. One factor that is often treated is the condyle-fossa relation or jaw relation of the TMJ. The habitual position condyle is constrained by occlusal contacts. This position may be not optimal for several reasons, such as: an improper fit of the lower teeth against the upper teeth (malocclusion), muscles may be hyper activated or not at their resting lengths, the condyle may be asymmetrically loaded during functional activities, and/or the load bearing condylar disc may be misaligned or displaced.

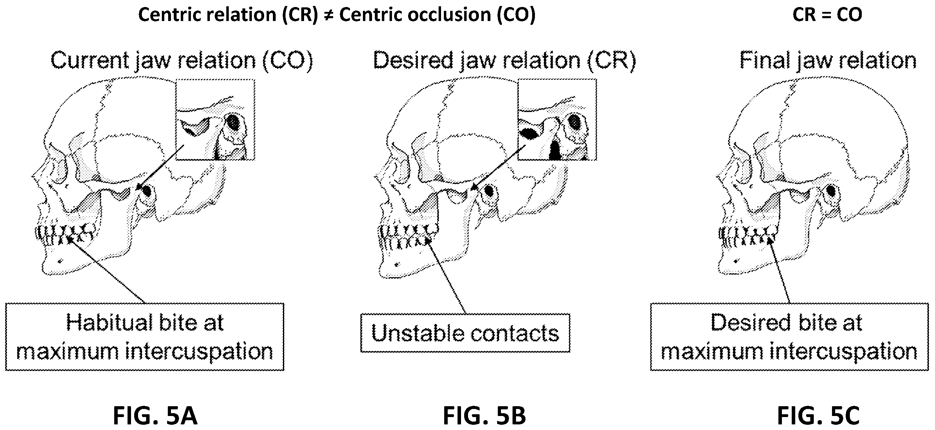

FIG. 5A-5C illustrate how an aligner may correct the jaw relation according to a doctor's prescription by redefining the constraining contacts. FIG. 5A shows a current jaw relation (CO) where the patient has a habitual bit at maximum intercuspation. If upper and lower tooth alignments are coordinated at a desired jaw relation (FIG. 5B), then the final treated position of the teeth (FIG. 5C) may correspond with the desired jaw relation (potentially CR=CO). This can be achieved by moving the lower jaw to desired location while performing orthodontic treatment aiming for normal occlusion at the desired jaw relation.

Another factor of TMD that may be managed with aligner therapy is the wear of teeth. Wear of teeth due to bruxism may lead to teeth shortening and therefore a shortened occlusal distance, which may then result in mis-programming in masticatory muscles. To manage this factor, permanent solutions e.g., restorative/prosthetic solution may be required. Aligner features can be developed to incorporate bite elevation features inside the aligner, such as table-top restorations, veneers, and bite splints, leading to a hybrid solution which achieves treatment goal of an aligner. In addition, prior to applying these solutions, orthodontic treatment may be necessary to move the teeth into desired position for bite elevation. This treatment may be performed with separate bite splints (e.g., that patients must wear for up to six months).

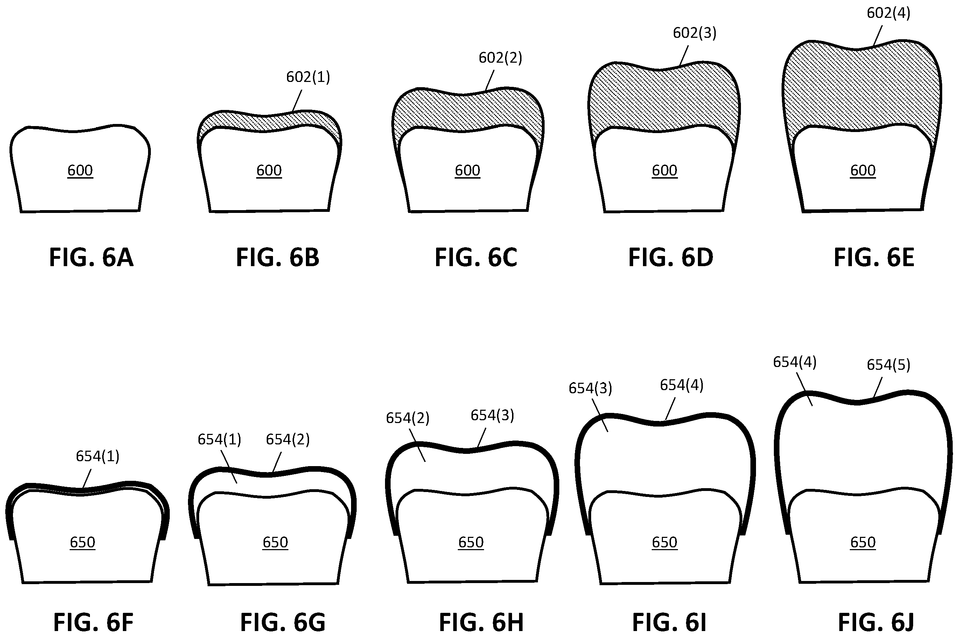

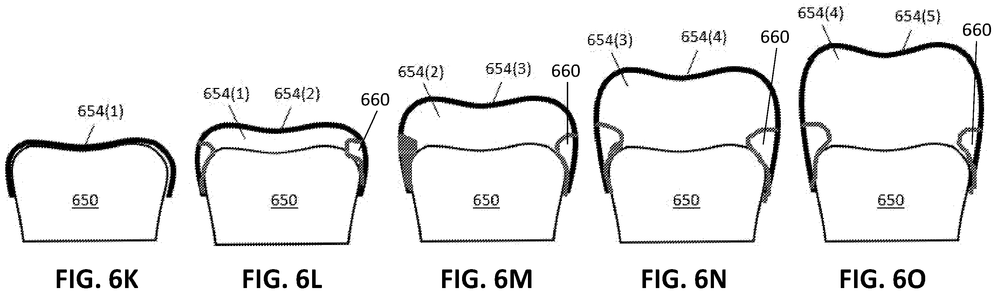

FIGS. 6A-6J illustrate aspects of an example modification of an orthodontic treatment plan to accommodate a bite elevation feature (e.g., for treatment of TMD). FIGS. 6A-6E show side section views of a virtual tooth 600 with virtual bite elevation features 601(1)-601(4) added in accordance with different stages of an orthodontic treatment plan. FIG. 6A shows a virtual model of the tooth 600 in a first (e.g., initial) position (e.g., relative to the jaw). FIG. 6E shows the virtual tooth 600 in a target (e.g., final) position (according to an orthodontic treatment plan) with a virtual target bite adjustment feature 602(4) positioned on an occlusal surface of the tooth 600. The height of the target bite adjustment feature 602(4) may be configured to adjust the patient's bite according to a desired bite position for treatment of TMD. For example, the height of the target bite adjustment feature 602(4) may adjust the relative positions of the patient's jaws such that the jaws are in a desired relation to each other and a maximum intercuspation is achieved (e.g., FIGS. 5A-5C).

FIGS. 6B-6D show the tooth 600 at intermediate stages of the treatment plan between the first (e.g., initial) position and the target (e.g., final) position. In each of the intermediate stage, the position of the tooth 600 is moved in accordance with a tooth movement path from the first (e.g., initial) position toward the target (e.g., final) position. In addition, in each of the intermediate stage, a corresponding intermediate virtual bite adjustment features 602(1), 602(2) and 602(3) is added on the occlusal surface of the tooth 600. As shown, a third intermediate bite adjustment feature 602(3) has a height that is less than a height of the target bite adjustment feature 602(4), a second bite adjustment feature 602(2) has a height that is less than the height of the third bite adjustment feature 602(3), and a first bite adjustment feature 602(1) has a height that is less than the height of the second bite adjustment feature 602(1).

Once the tooth 600 is modified with respective virtual bite adjustment features 602(1), 602(2), 602(3) and 602(4), virtual aligners (not shown) may be formed on each modified tooth for each stage of the treatment plan. The virtual aligners may be shaped and sized to apply a reposition force on the tooth according to the respective stage of the treatment plan.

FIGS. 6F-6J show a series of physical aligners 654(1), 654(2), 654(3), 654(4) and 654(5) placed on the physical tooth 650 of the patient. The shape and size of each aligner 654(1), 654(2), 654(3), 654(4) and 654(5) corresponds to the shape and size of each virtual aligner of a corresponding stage of the treatment plan. The aligner 654(1), 654(2), 654(3), 654(4) and 654(5) may be configured to move the tooth 650 in accordance with respective stages of the orthodontic treatment plan. For example, a first aligner 654(1) may be configured to apply a first repositioning force on the tooth 650 in accordance with a first stage, a second aligner 654(2) may be configured to apply a second repositioning force on the tooth 650 in accordance with a second stage, a third aligner 654(1) may be configured to apply a third repositioning force on the tooth 650 in accordance with a third stage, a fourth aligner 654(1) may be configured to apply a fourth repositioning force on the tooth 650 in accordance with a fourth stage, and a fifth aligner 654(1) may be configured to apply a fifth repositioning force on the tooth 650 in accordance with a fifth (e.g., final) stage.

In addition to applying repositioning forces on the tooth 650 to move the tooth 650 toward the target position (FIG. 6E), the occlusal heights of the aligners 654(1), 654(2), 654(3), 654(4) and 654(5) progressively increase in accordance with the progressively increasing heights of the virtual bite adjustment features 602(1), 602(2), 602(3) and 602(4). This stepwise modification creates a physical simulation toward the height of the target bite adjustment feature 602(4). For example, a first occlusal height of a first aligner 654(1) may be configured to modify the patient's bite by a first amount; a second occlusal height of a second aligner 654(2) may be configured to modify the patient's bite by a second amount greater than the first amount; a third occlusal height of a second aligner 654(3) may be configured to modify the patient's bite by a third amount greater than the second amount; a fourth occlusal height of a fourth aligner 654(4) may be configured to modify the patient's bite by a fourth amount greater than the third amount; and a fifth occlusal height of a fifth aligner 654(5) may be configured to modify the patient's bite by a fifth amount greater than the fourth amount. This incremental increase in height may allow the patient's teeth, mouth, jaws and/or mandibular joints to gradually move toward the height of target bite adjustment feature 602(4). In this way, the patient's mandibular joints and jaw muscles may gradually experience the changes in bite, thereby reducing chances of discomfort that the patient may otherwise experience due to a sudden change in bite when directly using an aligner having the target height 602(4).

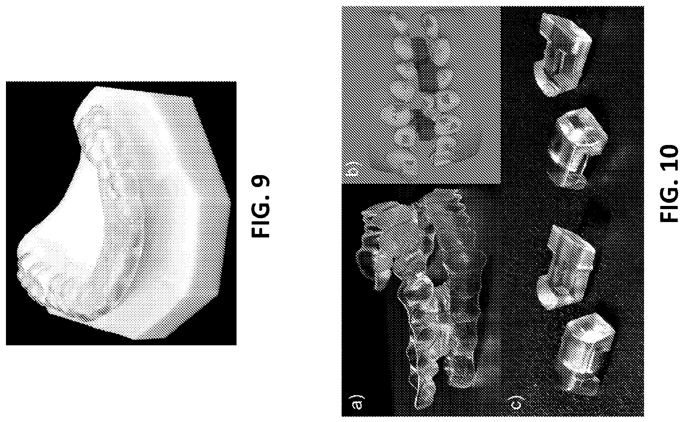

In the example of FIGS. 6F-6J, the occlusal surfaces of the aligners 654(1), 654(2), 654(3), 654(4) and 654(5) are shaped in accordance with occlusal surfaces of the underlying tooth 650. This may allow the occlusal surfaces of the aligners 654(1), 654(2), 654(3), 654(4) and 654(5) to naturally engage with a corresponding tooth of the opposite jaw (or an aligner on the opposite jaw). In other cases, the occlusal surfaces of the aligners 654(1), 654(2), 654(3), 654(4) and 654(5) may have a different shape, such as a flat shape (e.g., table-top, FIG. 9).

In some examples, spaces 654(1), 654(2), 654(3) and 654(4) between the tooth 650 and respective aligners 654(2), 654(3), 654(4) and 654(5) may be open spaces. In some instances, the open spaces are where gas (e.g., air) may reside. In some instances, the open spaces are in fluid communication with the patient's oral cavity so that air and/or the patient's oral fluid (e.g., saliva) may reside when the patient wears the aligners 654(1), 654(2), 654(3), 654(4) and 654(5).

In some examples, each of the aligners 654(2), 654(3), 654(4) and 654(5) has a substantially uniform thickness. For example, a thickness of the occlusal walls of each of the aligners 654(2), 654(3), 654(4) and 654(5) may be the same as non-occlusal walls of each of the aligners 654(2), 654(3), 654(4) and 654(5).

In some examples, the spaces 654(1), 654(2), 654(3) and 654(4) may be filled with a material, such as a polymer material, effectively making the walls of the aligners 654(2), 654(3), 654(4) and 654(5) over the occlusal surface of the tooth 600 thicker. This may be accomplished, for example, by incorporating the virtual bite adjustment features 602(1), 602(2), 602(3) and 602(4) into the walls of the virtual aligners, similar to what is described with respect to FIGS. 3A and 3B. In some examples, the thicker walls are made of a same material as a remainder of the aligners 654(2), 654(3), 654(4) and 654(5) (e.g., polymer material(s)). In some examples, the thicker walls are made of a different material as a remainder of the aligners 654(2), 654(3), 654(4) and 654(5). For example, at least a portion of the thicker walls may be made of a material having a different color than most of the remainder of the aligners 654(2), 654(3), 654(4) and 654(5). In some cases, the at least a portion of the ticker walls may be tooth colored, whereas most of the remainder of the aligners 654(2), 654(3), 654(4) and 654(5) may be substantially visibly transparent (clear). In some examples, at least a portion of the thicker wall may include a material that is more rigid or more flexible than the remainder of the aligners 654(2), 654(3), 654(4) and 654(5).

In some example, the aligners described herein may not filled up, but may be only colored from the inside so that the aligner may seat firmly on the teeth. See, e.g., FIGS. 6K-6O, showing regions 660.

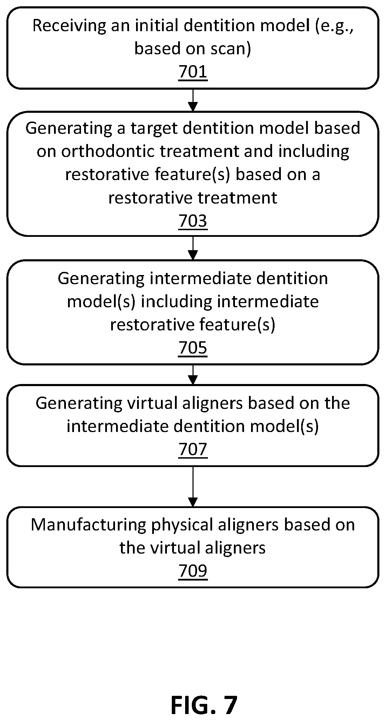

FIG. 7 is a flowchart indicating an example process for generating an ortho-restorative treatment plan and dental devices (e.g., aligners) that incorporate an orthodontic treatment with a restorative dental treatment. At 701, the initial dentition model of a patient's teeth is received. The initial dentition model may correspond to the patient's teeth prior to orthodontic treatment, or prior to further orthodontic treatment. The initial dentition model may be a digitized model, such as a 3D model obtained by a scan of the patient's dentition.

At 703, a target dentition model of the patient's teeth is generated based on a planned orthodontic treatment on the initial dentition model. The orthodontic treatment considers the addition of one or more restorative treatments on the patient's teeth (e.g., during or after the orthodontic treatment by one or more dental appliances). In some cases, the target dentition model may include the addition of one or more virtual restorative features, or morphing of one or more teeth to include one or more virtual restorative features. For example, one or more teeth of the target dentition model may include one or more virtual fillings, veneers, inlays, onlays and/or crowns. In some cases, the virtual restorative features include replacement of entire teeth or other features in the patient's mouth or jaw, such as one or more prosthetic teeth, dentures, bridges and/or gingival implants. In some cases, the virtual restorative feature(s) may be added to or integrated in the virtual aligner(s) (e.g., and not the virtual teeth). For example, the virtual restorative feature(s) may be integrated into a wall of the virtual aligners. In some cases, the virtual restorative feature(s) may be configured to cooperate with the aligner(s) to improve the performance, comfort and/or appearance of the aligner(s). See, e.g., FIGS. 4A-4D. In some cases, the virtual restorative feature(s) may be configured to modify aspects of the patient's bite. See e.g., FIGS. 6A-6J.

At 705, one or more virtual intermediate dentition models are generated. The intermediate dentition model(s) may represent the patient's dentition at one or more stages along a treatment path from the initial dentition model to the target dentition model. Each intermediate dentition model may include incremental changes in the position of one or more teeth toward their target positions. The intermediate dentition model(s) may include one or more intermediate restorative features that have a different size and/or shape as the restorative feature of the target dentition model. For example, the intermediate dentition model(s) may be smaller, thinner and/or shorter than the restorative feature of the target dentition model. In some cases, the intermediate restorative features may incrementally increase in size toward a final size of the restorative feature of the target dentition model.

At 707, one or more virtual aligners are generated based on the intermediate dentition models. In some cases, a virtual final aligner is also generated based on the target dentition model. The virtual aligner(s) may be shaped and sized to apply repositioning forces on one or more teeth in accordance with corresponding stages of the treatment plan. The intermediate restorative feature(s) and the final restorative feature in the target dentition are factored in the calculation of the shape and size of the virtual aligners factor in order to apply the prescribed repositioning forces. In some cases, the intermediate restorative feature(s) and the final restorative feature are integrated as part of the aligner(s) themselves, such as within the walls of the aligner(s). See, e.g., FIGS. 3A-3B and 4A-4D.

At 709, one or more physical aligners are manufactured based on the one or more virtual aligners. In some examples, one or more of the aligners are fabricated using additive manufacturing (e.g., direct 3D printing techniques). In some examples, one or more of the aligners are fabricated using molding techniques. Each aligner may be made of the same material (e.g., polymer type), or may be made of different materials (e.g., different polymer types and/or non-polymer material(s)).

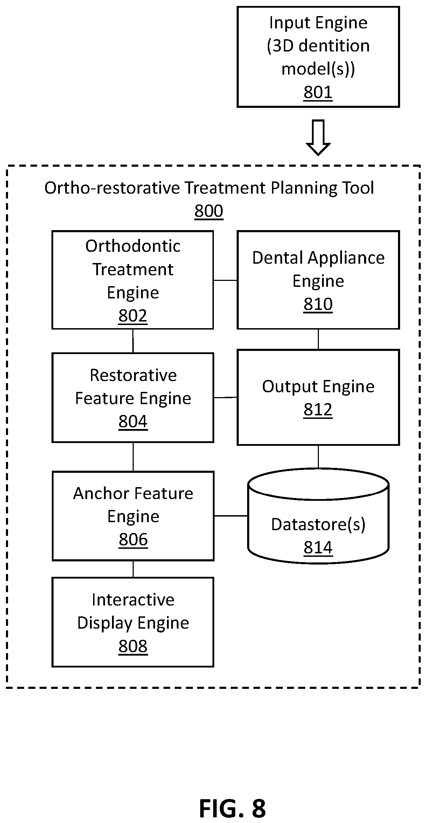

FIG. 8 is a diagram showing an example ortho-restorative treatment planning tool 800. The treatment planning tool 800 may be incorporated into a portion of another system (e.g., a general treatment planning system) and may therefore also be referred to as a sub-system. In some cases, the treatment planning tool 800 may be an add-on (e.g., plug-in) to a general treatment planning system. In any of the method and apparatuses described herein the treatment planning tool 800 may be invoked by a user control, such as a tab, button, etc., as part of treatment planning system, or may be separately invoked. In FIG. 8, the treatment planning tool 800 may include a plurality of engines and datastores 814. The treatment planning tool 800 may include or be part of a computer-readable medium, and may include (or provide access to) an input engine 801 (e.g., providing and/or allowing access to the patient's original dentition model used to fabricate an aligner of interest, and the patient's current dentition model, such as obtained by a dental scan). All or some of the original and current dentition model data may be stored in a datastore 814.

The treatment planning tool 800 may include an orthodontic treatment engine 802 that may compare an initial dentition model (e.g., current dentition) with a target dentition model to determine points (e.g., in 3D meshes) where the models differ. The initial and/or target dentition models may be formatted, scaled or normalized such that an accurate comparison may be made. The treatment engine 802 may be configured to parse a treatment plan into multiple stages, where each successive stage brings the initial dentition incrementally closer to the target dentition. The treatment planning tool 800 may also include a restorative feature engine 804 that may incorporate one or more restorative features to the dentition model(s) and/or one or more aligner models. In some examples, the restorative feature(s) may include dental fillings, bonding material, inlays, onlays, crowns, dentures, prosthetic teeth, bridges, bite adjustment features, gingival or palatal implants, and/or other restorative features.

The treatment planning tool 800 may also include an anchor feature engine 806 that is configured to generate one or more anchors (e.g., attachments, hooks and/or bars) that provide anchor point(s) for the aligner(s) to engage with. The anchor feature engine 806 may add one or more virtual anchors to one or more of the dentition model(s) and/or aligner model(s).

The treatment planning tool 800 may also include a dental appliance engine 810 that is configured to generate one or more dental appliances based on the various stages of the treatment plan. In some examples, the dental appliances are aligners (e.g., clear aligner). The dental appliances may be configured to incrementally implement each stage of the treatment plan.

The treatment planning tool 800 may further include an interactive display engine 808 that displays an interactive user interface. The user interface may display the initial dentition model, the target dentition model, the intermediate dentition model(s), and/or the aligner model(s). The user interface may include one or more tabs and/or tool bars that provide the user controls for viewing different aspects of the dentition models.

The datastore(s) may store any of the generated models (e.g., dentition model(s), restorative feature model(s), dental appliance model(s) and/or anchor model(s)). An output engine 812 may output results from one or more analyses performed by the treatment planning tool. For example, the output engine 812 may be configured to output instructions for fabricating one or more dental appliances (e.g., aligners) based on the virtual dental appliances. These instructions may be virtual 3D models of the dental appliances. In some cases, the instructions may be in a format suitable for a particular fabrication technique, such as an additive manufacturing process (e.g., direct 3D printing) and/or a molding process.

### Example 1: TMD Treatment Digital Workflow

The first step of a digital workflow is to determine CO and CR. One method is to have the patient bite on dental putty/wax at the habitual bite at maximum intercuspation, and at the desired jaw relation under the guidance of the dentist, respectively. Then, the dental putty/wax impressions may be scanned with a dental scanner (e.g., 3D scanner). A sample workflow may include: Step 1: dentist performs two scans on dental putty/wax impressions at CO and CR; Step 2: import these scans to treatment planning software and run ICP to obtain rigid body transformation from CO to CR; Step 3: use a command to impose jaw staging obtained in step 2; Step 4: run program at CR; and Step 5: set up treatment plans. It should be noted that step 1 may be completed using various techniques. For example, CBCT data may be segmented to isolate the TMJ. Then, a sliding interface may be developed in the treatment planning software to enable the dentist to drag the jaw to the desired location.

### Example 2: TMD Treatment Device Workflow

Once the CO and CR has been recorded, treatment plans may be set up different methods. A first example method may combine orthodontic treatment with deprogramming features so that the muscles can be relaxed and ready for reprogramming upon completion of orthodontic treatment. A second example method may perform immediate correction of jaw relation with aligner features and orthodontic treatment at the same time. A third example method may combine orthodontic treatment and restorative/prosthetic solutions with aligner features to perform treatment for patients with worn teeth due to bruxism. Details of these three methods along with variations in detailed workflows are described below. It should be noted that any of the three example methods presented below may be further combined in treatment, depending on the clinical situation.

### Method 1: Combine orthodontic treatment with deprogramming features

This method is designed for patients with only mild symptoms of TMD. The underlying assumption is that the jaw muscle of the patient should be naturally reprogrammed to find a new CR once malocclusion has been managed by orthodontic treatment successfully. The muscle that frequently prevents mandibular condylar seating is the lateral pterygoid - which is programmed to position the mandible to avoid pain and posterior interferences in the arc of closure. Among TMD patients, malocclusions usually cause mis-programming of the later pterygoid, leading to TMD symptoms including muscle pain. Deprogramming generally is done by placing an oral appliance in the anterior that eliminates posterior occlusal contact.

In this method, the orthodontic movement should be the same with regular aligner treatment while the deprogramming feature may be integrated to the aligner. For example, a flat occlusal plane splint (FIG. 9) may be integrated to a current aligner design. Alternatively, an anterior bite plane appliance may be integrated to achieve deprogramming. When the orthodontic treatment is completed, retainer therapy may facilitate the reprogramming of jaw muscles, establishing a new centric relation which corresponds to centric occlusion.

### Method 2: Combine orthodontic treatment with immediate correction of jaw relation using aligner features

This method is designed for patients experiencing TMJ so that the pain can be managed immediately with jaw relation correction. The underlying assumption is that jaw relation correction involves both orthodontic if proper retention is performed.

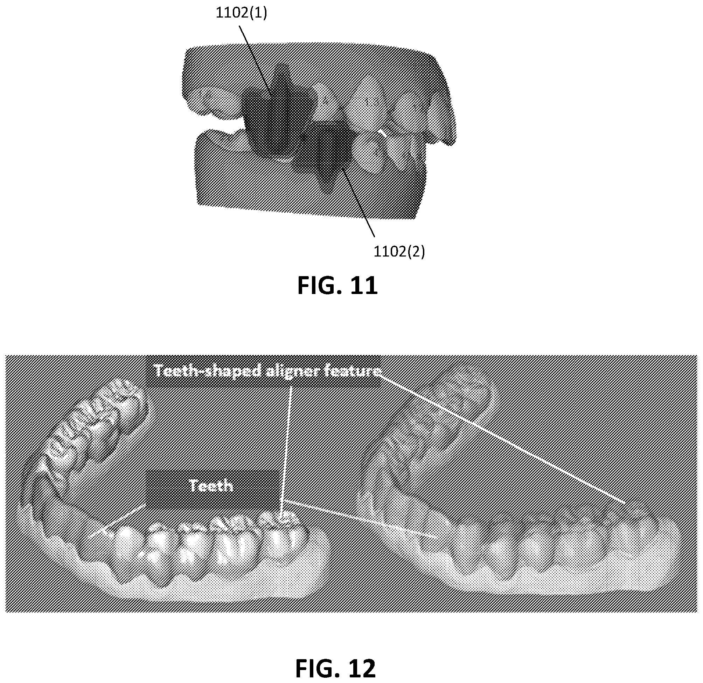

Immediate correction of jaw relation with aligner features could lead to simultaneous teeth aligning and jaw relation correction. This could provide immediate pain relief while moving the teeth to their permanent positions. Aligner features include occlusal mandibular advancement blocks (FIG. 10) or buccal mandibular advancement wings (1102(1) and 1102(2), FIG. 11), depending on the facial characteristic of the patient, as well as teeth-shaped aligner features (FIG. 12) which may instantly correct malocclusion while worn. The occlusal mandibular advancement blocks method may be applied in promoting condylar remodeling in patients with Class II malocclusion.

Besides correcting for jaw relation, core concepts of functional occlusion should also be incorporated into the final position. Many of these concepts are dynamic in nature (e.g., anterior guidance, envelope of function, envelope of motion), and would benefit from a prediction of articulation.

### Method 3: Combine orthodontic treatment with restorative/prosthetic solution using aligner features

This method is designed for patients experiencing prolonged symptoms of TMD and suffering from severe bruxism, which could lead to shortened teeth and mis-programmed muscles. These patients may also need permanent solutions e.g., restorative/prosthetic solution to recover.

Prior to applying these solutions, orthodontic treatment may be necessary to move the teeth into desired position for bite elevation. In addition, aligner features can be developed to incorporate table-top restorations inside the aligner, leading to a hybrid solution which achieves treatment goal of an aligner, a veneer, and a bite splint (FIG. 12). Treatment may be performed with separate bite splints that patients must wear for up to six months. Compared to other methods, this method may be less invasive and may provide superior comfort.

Because orthodontic movement is relatively slow, we may provide aligner features which could palliate symptoms of TMD. Further, not every factor of TMD may be treated with orthodontic movement alone. Some aligner features may be needed to completely treat the condition. For example, hyperactivation of the masticatory muscles may not be wholly caused by improper occlusal contacts. Deprogramming features, vertical adjustment, or bite plane stabilization features may be incorporated into the aligner therapy to address muscle-related factors. These methods may include: Bite plane stabilization occlusal features precisely placed to provide even and symmetric contacts on all teeth; Vertical adjustment, in which optimal muscle resting length may require a slight mouth opening (an occlusal pad); and Deprogramming features that are posterior dis-occluding features (e.g., a bite ramp).

Any of the methods and systems described herein may include the use of one or more user interfaces. For example, a computer (e.g., desktop, laptop, tablet, or phone) may be configured to display one or more user interfaces showing aspects of the dental treatment plan. In some examples, the initial dental model(s), target dentition model(s) and/or intermediate dentition model(s) are displayed on the user interface(s).

Any of the methods (including user interfaces) described herein may be implemented as software, hardware or firmware, and may be described as a non-transitory computer-readable storage medium storing a set of instructions capable of being executed by a processor (e.g., computer, tablet, smartphone, etc.), that when executed by the processor causes the processor to control perform any of the steps, including but not limited to: displaying, communicating with the user, analyzing, modifying parameters (including timing, frequency, intensity, etc.), determining, alerting, or the like. For example, any of the methods described herein may be performed, at least in part, by an apparatus including one or more processors having a memory storing a non-transitory computer-readable storage medium storing a set of instructions for the processes(s) of the method.

While various embodiments have been described and/or illustrated herein in the context of fully functional computing systems, one or more of these example embodiments may be distributed as a program product in a variety of forms, regardless of the particular type of computer-readable media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the example embodiments disclosed herein.

As described herein, the computing devices and systems described and/or illustrated herein broadly represent any type or form of computing device or system capable of executing computer-readable instructions, such as those contained within the modules described herein. In their most basic configuration, these computing device(s) may each comprise at least one memory device and at least one physical processor.

The term "memory" or "memory device," as used herein, generally represents any type or form of volatile or non-volatile storage device or medium capable of storing data and/or computer-readable instructions. In one example, a memory device may store, load, and/or maintain one or more of the modules described herein. Examples of memory devices comprise, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In addition, the term "processor" or "physical processor," as used herein, generally refers to any type or form of hardware-implemented processing unit capable of interpreting and/or executing computer-readable instructions. In one example, a physical processor may access and/or modify one or more modules stored in the above-described memory device. Examples of physical processors comprise, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the method steps described and/or illustrated herein may represent portions of a single application. In addition, in some embodiments one or more of these steps may represent or correspond to one or more software applications or programs that, when executed by a computing device, may cause the computing device to perform one or more tasks, such as the method step.

In addition, one or more of the devices described herein may transform data, physical devices, and/or representations of physical devices from one form to another. Additionally or alternatively, one or more of the modules recited herein may transform a processor, volatile memory, non-volatile memory, and/or any other portion of a physical computing device from one form of computing device to another form of computing device by executing on the computing device, storing data on the computing device, and/or otherwise interacting with the computing device.

The term "computer-readable medium," as used herein, generally refers to any form of device, carrier, or medium capable of storing or carrying computer-readable instructions. Examples of computer-readable media comprise, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

A person of ordinary skill in the art will recognize that any process or method disclosed herein can be modified in many ways. The process parameters and sequence of the steps described and/or illustrated herein are given by way of example. While the steps illustrated and/or described herein may be shown or discussed in a particular order, these steps do not necessarily need to be performed in the order illustrated or discussed.

The various exemplary methods described and/or illustrated herein may also omit one or more of the steps described or illustrated herein or comprise additional steps in addition to those disclosed.

The processor as described herein can be configured to perform one or more steps of any method disclosed herein. Alternatively or in combination, the processor can be configured to combine one or more steps of one or more methods as disclosed herein.

When a feature or element is herein referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments. It will also be appreciated by those of skill in the art that references to a structure or feature that is disposed "adjacent" another feature may have portions that overlap or underlie the adjacent feature.

Terminology used herein is for the purpose of describing particular embodiments only and is not intended to be limiting of the invention. For example, as used herein, the singular forms "a", "an" and "the" are intended to include the plural forms as well, unless the context clearly indicates otherwise. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items and may be abbreviated as "/".

Spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

Although the terms "first" and "second" may be used herein to describe various features/elements (including steps), these features/elements should not be limited by these terms, unless the context indicates otherwise. These terms may be used to distinguish one feature/element from another feature/element. Thus, a first feature/element discussed below could be termed a second feature/element, and similarly, a second feature/element discussed below could be termed a first feature/element without departing from the teachings of the present invention.

Throughout this specification and the claims which follow, unless the context requires otherwise, the word "comprise", and variations such as "comprises" and "comprising" means various components can be co-jointly employed in the methods and articles (e.g., compositions and apparatuses including device and methods). For example, the term "comprising" will be understood to imply the inclusion of any stated elements or steps but not the exclusion of any other elements or steps.

The phrase "about" or "approximately" may be used when describing magnitude and/or position to indicate that the value and/or position described is within a reasonable expected range of values and/or positions. For example, a numeric value may have a value that is +/- 0.1% of the stated value (or range of values), +/- 1% of the stated value (or range of values), +/- 2% of the stated value (or range of values), +/- 5% of the stated value (or range of values), +/- 10% of the stated value (or range of values), etc.

Although various illustrative embodiments are described above, any of a number of changes may be made to various embodiments without departing from the scope of the invention as described by the claims. For example, the order in which various described method steps are performed may often be changed in alternative embodiments, and in other alternative embodiments one or more method steps may be skipped altogether. Optional features of various device and system embodiments may be included in some embodiments and not in others. Therefore, the foregoing description is provided primarily for exemplary purposes and should not be interpreted to limit the scope of the invention as it is set forth in the claims.

The examples and illustrations included herein show, by way of illustration and not of limitation, specific embodiments in which the subject matter may be practiced. As mentioned, other embodiments may be utilized and derived there from, such that structural and logical substitutions and changes may be made without departing from the scope of this disclosure.

## Claims

1. A method of generating an ortho-restorative treatment plan for a patient's dentition, the method comprising:
generating a treatment plan for repositioning one or more teeth (100, 150, 200, 250, 300, 350) from an initial position of an initial dentition model toward a target position of a target dentition model, wherein generating the treatment plan comprises generating intermediate dentition models corresponding to stages along a treatment path, wherein the intermediate dentition models comprise:
a first intermediate dentition model corresponding to a first stage of the treatment plan, wherein the first intermediate dentition model includes a first intermediate restorative feature (102(1-3), 156(1-3), 202, 252, 302, 352) arranged at a location corresponding to a location for a planned dental restoration (102, 152), on the patient's dentition, wherein the first intermediate restorative feature has a first size that is smaller than a size of the planned dental restoration, and
a second intermediate dentition model corresponding to a second stage of the treatment plan, wherein the second intermediate dentition model includes a second intermediate restorative feature (102(1-3), 156(1-3), 202, 252, 302, 352) arranged at the location corresponding to the location for the planned dental restoration on the patient's dentition, wherein the second intermediate restorative feature has a second size that is larger than the first size of the first intermediate restorative feature and smaller than the size of the planned dental restoration.

2. The method of claim 1, wherein the planned dental restoration comprises one or more of a filling, a bonding material, a veneer, a bite adjustment feature, an inlay, an onlay, a crown, a prosthetic tooth, a bridge, dentures, and a gingival implant.

3. The method of claim 1, further comprising forming a first intermediate aligner model that is configured to implement the first stage of the treatment plan, and forming a second intermediate aligner model that is configured to implement the second stage of the treatment plan.

4. The method of claim 3, further comprising forming a first and second physical intermediate aligners corresponding to the first and second intermediate aligner models.

5. The method of claim 3, further comprising morphing the first intermediate aligner model to include the first intermediate restorative feature, and morphing the second intermediate aligner model to include the second intermediate restorative feature.

6. The method of claim 1, further comprising morphing the first intermediate dentition model to include the first intermediate restorative feature, and morphing the second intermediate dentition model to include the second intermediate restorative feature.

7. The method of claim 1, wherein the first and second intermediate dentition models are virtual three-dimensional (3D) models.

8. The method of claim 1, wherein the first intermediate restorative feature is on an occlusal surface of one or more teeth of the first intermediate dentition model, and the second intermediate restorative feature is on an occlusal surface of one or more teeth of the second intermediate dentition model, or wherein the first intermediate restorative feature is on a buccal surface of one or more teeth of the first intermediate dentition model, and the second intermediate restorative feature is on a buccal surface of one or more teeth of the second intermediate dentition model.

9. The method of claim 1, further comprising forming an anchor model on each of the first and second intermediate dentition models, the anchor model corresponding to an anchor configured to cooperate with a corresponding aligner model to achieve movement of one or more teeth in a desired direction.

10. The method of claim 1, wherein the first intermediate restorative feature has a lesser thickness than the second intermediate restorative feature, or wherein the first intermediate restorative feature is integrated into the first intermediate aligner model, and the second intermediate restorative feature is integrated into the second intermediate aligner model, wherein each of the first and second intermediate restorative features has a different color than a majority of the corresponding first and second intermediate aligner models.

11. A non-transient, computer-readable medium containing program instructions to generate an ortho-restorative treatment plan, the program instructions configured to cause a processor to:
generate a treatment plan for repositioning one or more teeth (100, 150, 200, 250, 300, 350) from an initial position of an initial dentition model toward a target position of a target dentition model, wherein generating the treatment plan comprises generating intermediate dentition models corresponding to stages along a treatment path, wherein the intermediate dentition models comprise:
a first intermediate dentition model corresponding to a first stage of the treatment plan, wherein the first intermediate dentition model includes a first intermediate restorative feature (102(1-3), 156(1-3), 202, 252, 302, 352) arranged at a location corresponding to a location for a planned dental restoration (102, 152), on the patient's dentition, wherein the first intermediate restorative feature has a first size that is smaller than a size of the planned dental restoration, and
a second intermediate dentition model corresponding to a second stage of the treatment plan, wherein the second intermediate dentition model includes a second intermediate restorative feature (102(1-3), 156(1-3), 202, 252, 302, 352) arranged at the location corresponding to the location for the planned dental restoration on the patient's dentition, wherein the second intermediate restorative feature has a second size that is larger than the first size of the first intermediate restorative feature and smaller than the size of the planned dental restoration.

12. The non-transient, computer-readable medium of claim 11, wherein the program instructions are further configured to cause the processor to form a first intermediate aligner model that is configured to implement the first stage of the treatment plan, and to form a second intermediate aligner model that is configured to implement the second stage of the treatment plan, optionally wherein the program instructions are further configured to cause the processor to output instructions for forming a first physical intermediate aligner corresponding to the first intermediate aligner model, and for forming a second physical intermediate aligner corresponding to the second intermediate aligner model.

13. The non-transient, computer-readable medium of claim 11, wherein the planned dental restoration comprises one or more of a filling, a bonding material, a veneer, a bite adjustment feature, an inlay, an onlay, a crown, a prosthetic tooth, a bridge, dentures, and a gingival implant.

14. An ortho-restorative treatment system comprising:
a series of aligners configured to implement an ortho-restorative treatment plan on a patient's dentition, wherein the series of aligners comprises:
a first aligner having walls that are configured to apply a first repositioning force on one or more teeth (100, 150, 200, 250, 300, 350) of the patient's dentition in accordance with a first stage of the ortho-restorative treatment plan, the first aligner including a first intermediate restorative feature (102(1-3), 156(1-3), 202, 252, 302, 352), wherein when the first aligner is worn, first intermediate restorative feature is arranged to be positioned at a location on the patient's dentition for a planned dental restoration, wherein the first intermediate restorative feature has a first size; and
a second aligner having walls that are configured to apply a second repositioning force on the one or more teeth of the patient's dentition in accordance with a second stage of the ortho-restorative treatment plan, the second aligner including a second intermediate restorative feature (102(1-3), 156(1-3), 202, 252, 302, 352), wherein when the second aligner is worn, second intermediate restorative feature is arranged to be positioned at the location on the patient's dentition for the planned dental restoration, wherein the second intermediate restorative feature has a second size that is larger than the first size of the first intermediate restorative feature .

15. The ortho-restorative treatment system of claim 14, wherein the first intermediate restorative feature has a first thickness that is less than a thickness of the planned dental restoration, and wherein the second intermediate restorative feature has a second thickness that is greater than the first intermediate restorative feature and less than the thickness of the planned dental restoration, or wherein the planned dental restoration is a veneer, a filling, a bonding material, an inlay, an onlay, a crown, a prosthetic tooth, a denture, a bridge, a gingival implant or a palatal implant.

## Patentansprüche

1. Verfahren zum Generieren eines ortho-restaurativen Behandlungsplans für das Gebiss eines Patienten, wobei das Verfahren umfasst:
Generieren eines Behandlungsplans zum Neupositionieren eines oder mehrere Zähne (100, 150, 200, 250, 300, 350) von einer anfänglichen Position eines anfänglichen Gebissmodells zu einer Zielposition eines Gebisszielmodells, wobei das Generieren des Behandlungsplans das Generieren von Gebisszwischenmodellen umfasst, die Phasen entlang eines Behandlungspfads entsprechen, wobei die Gebisszwischenmodelle dies umfassen:
ein erstes Gebisszwischenmodell, das einer ersten Phase des Behandlungsplans entspricht, wobei das erste Gebisszwischenmodell ein erstes restauratives Zwischenmerkmal (102(1-3), 156(1-3), 202, 252, 302, 352) beinhaltet, das an einem Ort angeordnet ist, der einem Ort für eine geplante Zahnrestauration (102, 152) am Gebiss des Patienten entspricht, wobei das erste restaurative Zwischenmerkmal eine erste Größe aufweist, die kleiner als eine Größe der geplanten Zahnrestauration ist, und
ein zweites Gebisszwischenmodell, das einer zweiten Phase des Behandlungsplans entspricht, wobei das zweite Gebisszwischenmodell ein zweites restauratives Zwischenmerkmal (102(1-3), 156(1-3), 202, 252, 302, 352) beinhaltet, das an dem Ort angeordnet ist, der dem Ort für die geplante Zahnrestauration am Gebiss des Patienten entspricht, wobei das zweite restaurative Zwischenmerkmal eine zweite Größe aufweist, die größer als die erste Größe des ersten restaurativen Zwischenmerkmals und kleiner als die Größe der geplanten Zahnrestauration ist.

2. Verfahren nach Anspruch 1, wobei die geplante Zahnrestauration eines oder mehrere von einer Füllung, einem Bonding-Material, einer Verblendung, einem Bissanpassungsmerkmal, einem Inlay, einem Onlay, einer Krone, einem Zahnersatz, einer Brücke, einer Zahnprothese und einem Zahnfleischimplantat umfasst.

3. Verfahren nach Anspruch 1, ferner umfassend das Bilden eines ersten Ausrichterzwischenmodells, das dazu ausgelegt ist, die erste Phase des Behandlungsplans zu implementieren, und das Bilden eines zweiten Ausrichterzwischenmodells, das dazu ausgelegt ist, die zweite Phase des Behandlungsplans zu implementieren.

4. Verfahren nach Anspruch 3, ferner umfassend einen ersten und einen zweiten physischen Zwischenausrichter, die dem ersten und dem zweiten Ausrichterzwischenmodell entsprechen.

5. Verfahren nach Anspruch 3, ferner umfassend das Morphing des ersten Ausrichterzwischenmodells, sodass es das erste restaurative Zwischenmerkmal beinhaltet, und das Morphing des zweiten Ausrichterzwischenmodells, sodass es das zweite restaurative Zwischenmerkmal beinhaltet.

6. Verfahren nach Anspruch 1, ferner umfassend das Morphing des ersten Gebisszwischenmodells, sodass es das erste restaurative Zwischenmerkmal beinhaltet, und das Morphing des zweiten Gebisszwischenmodells, sodass es das zweite restaurative Zwischenmerkmal beinhaltet.

7. Verfahren nach Anspruch 1, wobei das erste und das zweite Gebisszwischenmodell virtuelle dreidimensionale (3D) Modelle sind.

8. Verfahren nach Anspruch 1, wobei sich das erste restaurative Zwischenmerkmal auf einer Kaufläche eines oder mehrerer Zähne des ersten Gebisszwischenmodells befindet und sich das zweite restaurative Zwischenmerkmal auf einer Kaufläche eines oder mehrerer Zähne des zweiten Gebisszwischenmodells befindet, oder wobei sich das erste restaurative Zwischenmerkmal auf einer bukkalen Fläche eines oder mehrerer Zähne des ersten Gebisszwischenmodells befindet und sich das zweite restaurative Zwischenmerkmal auf einer bukkalen Fläche eines oder mehrerer Zähne des zweiten Gebisszwischenmodells befindet.

9. Verfahren nach Anspruch 1, ferner umfassend das Bilden eines Ankermodells an jedem von dem ersten und dem zweiten Gebisszwischenmodell, wobei das Ankermodell einem Anker entspricht, der dazu ausgelegt ist, mit einem entsprechenden Ausrichtermodell zusammenzuarbeiten, um eine Bewegung eines oder mehrerer Zähne in einer gewünschten Richtung zu erzielen.

10. Verfahren nach Anspruch 1, wobei das erste restaurative Zwischenmerkmal eine geringere Dicke aufweist als das zweite restaurative Zwischenmerkmal oder wobei das erste restaurative Zwischenmerkmal in das erste Ausrichterzwischenmodell integriert ist und das zweite restaurative Zwischenmerkmal in das zweite Ausrichterzwischenmodell integriert ist, wobei jedes von dem ersten und dem zweiten restaurativen Zwischenmerkmal eine andere Farbe hat als eine Mehrzahl von dem entsprechenden ersten und dem zweiten Ausrichterzwischenmodell.

11. Nicht-transientes, computerlesbares Medium, das Programmanweisungen zum Generieren eines ortho-restaurativen Behandlungsplans enthält, wobei die Programmanweisungen dazu ausgelegt sind, einen Prozessor hierzu zu veranlassen:
Generieren eines Behandlungsplans zum Neupositionieren eines oder mehrere Zähne (100, 150, 200, 250, 300, 350) von einer anfänglichen Position eines anfänglichen Gebissmodells zu einer Zielposition eines Gebisszielmodells, wobei das Generieren des Behandlungsplans das Generieren von Gebisszwischenmodellen umfasst, die Phasen entlang eines Behandlungspfads entsprechen, wobei die Gebisszwischenmodelle dies umfassen:
ein erstes Gebisszwischenmodell, das einer ersten Phase des Behandlungsplans entspricht, wobei das erste Gebisszwischenmodell ein erstes restauratives Zwischenmerkmal (102(1-3), 156(1-3), 202, 252, 302, 352) beinhaltet, das an einem Ort angeordnet ist, der einem Ort für eine geplante Zahnrestauration (102, 152) am Gebiss des Patienten entspricht, wobei das erste restaurative Zwischenmerkmal eine erste Größe aufweist, die kleiner als eine Größe der geplanten Zahnrestauration ist, und
ein zweites Gebisszwischenmodell, das einer zweiten Phase des Behandlungsplans entspricht, wobei das zweite Gebisszwischenmodell ein zweites restauratives Zwischenmerkmal (102(1-3), 156(1-3), 202, 252, 302, 352) beinhaltet, das an dem Ort angeordnet ist, der dem Ort für die geplante Zahnrestauration am Gebiss des Patienten entspricht, wobei das zweite restaurative Zwischenmerkmal eine zweite Größe aufweist, die größer als die erste Größe des ersten restaurativen Zwischenmerkmals und kleiner als die Größe der geplanten Zahnrestauration ist.

12. Nicht-transientes, computerlesbares Medium nach Anspruch 11, wobei die Programmanweisungen ferner dazu ausgelegt sind, den Prozessor zu veranlassen, ein erstes Ausrichterzwischenmodell zu bilden, das dazu ausgelegt ist, die erste Phase des Behandlungsplans zu implementieren, und ein zweites Ausrichterzwischenmodell zu bilden, das dazu ausgelegt ist, die zweite Phase des Behandlungsplans zu implementieren, wobei optional die die Programmanweisungen ferner dazu ausgelegt sind, den Prozessor zu veranlassen, Anweisungen zum Bilden eines ersten physischen Zwischenausrichters auszugeben, der dem ersten Ausrichterzwischenmodell entspricht, und zum Bilden eines zweiten physischen Zwischenausrichters, der dem zweiten Ausrichterzwischenmodell entspricht.

13. Nicht-transientes, computerlesbares Medium nach Anspruch 11, wobei die geplante Zahnrestauration eines oder mehrere von einer Füllung, einem Bonding-Material, einer Verblendung, einem Bissanpassungsmerkmal, einem Inlay, einem Onlay, einer Krone, einem Zahnersatz, einer Brücke, einer Zahlprothese und einem Zahnfleischimplantat umfasst.

14. Ortho-restauratives Behandlungssystem, umfassend:
eine Reihe von Ausrichtern, die dazu ausgelegt sind,
einen ortho-restaurativen Behandlungsplan am Gebiss eines Patienten zu implementieren, wobei die Reihe von Ausrichtern dies umfasst:
einen ersten Ausrichter, der Wände aufweist, die dazu ausgelegt sind, eine erste Repositionierungskraft auf einen oder mehrere Zähne (100, 150, 200, 250, 300, 350) des Patientengebisses gemäß
einer ersten Phase des ortho-restaurativen Behandlungsplans anzuwenden, wobei der erste Ausrichter ein erstes restauratives Zwischenmerkmal (102(1-3), 156(1-3), 202, 252, 302, 352) aufweist, wobei, wenn der erste Ausrichter getragen wird, ein erstes restauratives Zwischenmerkmal so angeordnet wird, dass es an einem Ort des Patientengebisses für eine geplante Zahnrestauration positioniert ist, wobei das erste restaurative Zwischenmerkmal eine erste Größe aufweist; und
einen zweiten Ausrichter, der Wände aufweist, die dazu ausgelegt sind, eine zweite Repositionierungskraft auf die ein oder mehreren Zähne des Patientengebisses gemäß einer zweiten Phase des ortho-restaurativen Behandlungsplans anzuwenden, wobei der zweite Ausrichter ein zweites restauratives Zwischenmerkmal (102(1-3), 156(1-3), 202, 252, 302, 352) aufweist, wobei, wenn der zweite Ausrichter getragen wird, ein zweites restauratives Zwischenmerkmal so angeordnet wird, dass es an dem Ort des Patientengebisses für die geplante Zahnrestauration positioniert ist, wobei das zweite restaurative Zwischenmerkmal eine zweite Größe aufweist, die größer als die erste Größe des ersten restaurative Zwischenmerkmals ist.

15. Ortho-restauratives Behandlungssystem nach Anspruch 14, wobei das erste restaurative Zwischenmerkmal eine erste Dicke aufweist, die kleiner als eine Dicke der geplanten Zahnrestauration ist, und wobei das zweite restaurative Zwischenmerkmal eine zweite Dicke aufweist, die größer als das erste restaurative Zwischenmerkmal und kleiner als die Dicke der geplanten Zahnrestauration ist, oder wobei die geplante Zahnrestauration eine Verblendung, eine Füllung, ein Bonding-Material, ein Inlay, ein Onlay, eine Krone, ein Zahnersatz, eine Zahnprothese, eine Brücke, ein Zahnfleischimplantat oder ein Gaumenimplantat ist.

## Revendications

1. Procédé de génération d'un plan de traitement ortho-restauratif pour la dentition d'un patient, le procédé comprenant :
la génération d'un plan de traitement pour repositionner une ou plusieurs dents (100, 150, 200, 250, 300, 350) d'une position initiale d'un modèle de dentition initial vers une position cible d'un modèle de dentition cible,
la génération du plan de traitement comprenant la génération de modèles de dentition intermédiaires correspondant à des étapes le long d'une trajectoire de traitement, les modèles de dentition intermédiaires comprenant :
un premier modèle de dentition intermédiaire correspondant à une première étape du plan de traitement, le premier modèle de dentition intermédiaire comprenant une première caractéristique restaurative intermédiaire (102(1-3), 156(1-3), 202, 252, 302, 352) agencée à un emplacement correspondant à un emplacement pour une restauration dentaire planifiée (102, 152), sur la dentition du patient, la première caractéristique restaurative intermédiaire ayant une première taille qui est inférieure à une taille de la restauration dentaire planifiée, et
un deuxième modèle de dentition intermédiaire correspondant à une deuxième étape du plan de traitement, le deuxième modèle de dentition intermédiaire comprenant une deuxième caractéristique restaurative intermédiaire (102(1-3), 156(1-3), 202, 252, 302, 352) agencée à l'emplacement correspondant à l'emplacement de la restauration dentaire planifiée sur la dentition du patient, la deuxième caractéristique restaurative intermédiaire ayant une deuxième taille qui est supérieure à la première taille de la première caractéristique restaurative intermédiaire et inférieure à la taille de la restauration dentaire planifiée.

2. Procédé selon la revendication 1, la restauration dentaire planifiée comprenant un ou plusieurs éléments parmi un remplissage, un matériau de liaison, un placage, une caractéristique d'ajustement de morsure, une incrustation, un onlay, une couronne, une dent prothétique, un pont, une prothèse dentaire et un implant gingival.

3. Procédé selon la revendication 1, comprenant en outre la formation d'un premier modèle d'aligneur intermédiaire qui est configuré pour mettre en œuvre la première étape du plan de traitement, et la formation d'un deuxième modèle d'aligneur intermédiaire qui est configuré pour mettre en œuvre la deuxième étape du plan de traitement.

4. Procédé selon la revendication 3, comprenant en outre la formation d'un premier et d'un deuxième aligneur physique intermédiaire correspondant aux premier et deuxième modèles d'aligneur intermédiaire.

5. Procédé selon la revendication 3, comprenant en outre la morphisation du premier modèle d'aligneur intermédiaire pour inclure la première caractéristique restaurative intermédiaire, et la morphisation du deuxième modèle d'aligneur intermédiaire pour inclure la deuxième caractéristique restaurative intermédiaire.

6. Procédé selon la revendication 1, comprenant en outre la morphisation du premier modèle de dentition intermédiaire pour inclure la première caractéristique restaurative intermédiaire, et la morphisation du deuxième modèle de dentition intermédiaire pour inclure la deuxième caractéristique restaurative intermédiaire.

7. Procédé selon la revendication 1, les premier et deuxième modèles de dentition intermédiaires étant des modèles tridimensionnels virtuels (3D).

8. Procédé selon la revendication 1, la première caractéristique restaurative intermédiaire étant sur une surface occlusale d'une ou plusieurs dents du premier modèle de dentition intermédiaire, et la deuxième caractéristique restaurative intermédiaire étant sur une surface occlusale d'une ou plusieurs dents du deuxième modèle de dentition intermédiaire, ou la première caractéristique restaurative intermédiaire étant sur une surface buccale d'une ou plusieurs dents du premier modèle de dentition intermédiaire, et la deuxième caractéristique restaurative intermédiaire étant sur une surface buccale d'une ou plusieurs dents du deuxième modèle de dentition intermédiaire.

9. Procédé selon la revendication 1, comprenant en outre la formation d'un modèle d'ancrage sur chacun des premier et deuxième modèles de dentition intermédiaires, le modèle d'ancrage correspondant à un ancrage configuré pour coopérer avec un modèle d'aligneur correspondant pour réaliser un mouvement d'une ou plusieurs dents dans une direction souhaitée.

10. Procédé selon la revendication 1, la première caractéristique restaurative intermédiaire ayant une épaisseur inférieure à celle de la deuxième caractéristique restaurative intermédiaire, ou la première caractéristique restaurative intermédiaire étant intégrée dans le premier modèle d'aligneur intermédiaire, et la deuxième caractéristique restaurative intermédiaire étant intégrée dans le deuxième modèle d'aligneur intermédiaire, chacune des première et deuxième caractéristiques restauratives intermédiaire ayant une couleur différente de la majorité des premier et deuxième modèles d'aligneur intermédiaires correspondants.

11. Support lisible par ordinateur non transitoire comportant des instructions de programme pour générer un plan de traitement ortho-restauratif, les instructions de programme étant configurées pour amener un processeur à :
générer un plan de traitement pour repositionner une ou plusieurs dents (100, 150, 200, 250, 300, 350) d'une position initiale d'un modèle de dentition initial vers une position cible d'un modèle de dentition cible, la génération du plan de traitement comprenant la génération de modèles de dentition intermédiaires correspondant à des étapes le long d'une trajectoire de traitement, les modèles de dentition intermédiaires comprenant :
un premier modèle de dentition intermédiaire correspondant à une première étape du plan de traitement, le premier modèle de dentition intermédiaire comprenant une première caractéristique restaurative intermédiaire (102(1-3), 156(1-3), 202, 252, 302, 352) agencée à un emplacement correspondant à un emplacement pour une restauration dentaire planifiée (102, 152), sur la dentition du patient, la première caractéristique restaurative intermédiaire ayant une première taille qui est inférieure à une taille de la restauration dentaire planifiée, et
un deuxième modèle de dentition intermédiaire correspondant à une deuxième étape du plan de traitement, le deuxième modèle de dentition intermédiaire comprenant une deuxième caractéristique restaurative intermédiaire (102(1-3), 156(1-3), 202, 252, 302, 352) agencée à l'emplacement correspondant à l'emplacement de la restauration dentaire planifiée sur la dentition du patient, la deuxième caractéristique restaurative intermédiaire ayant une deuxième taille qui est supérieure à la première taille de la première caractéristique restaurative intermédiaire et inférieure à la taille de la restauration dentaire planifiée.

12. Support lisible par ordinateur non transitoire selon la revendication 11, les instructions de programme étant en outre configurées pour amener le processeur à former un premier modèle d'aligneur intermédiaire qui est configuré pour mettre en œuvre la première étape du plan de traitement, et pour former un deuxième modèle d'aligneur intermédiaire configuré pour mettre en œuvre la deuxième étape du plan de traitement, optionnellement les instructions du programme étant en outre configurées pour amener le processeur à sortir des instructions pour former un premier aligneur intermédiaire physique correspondant au premier modèle d'aligneur intermédiaire, et pour former un deuxième aligneur intermédiaire physique correspondant au deuxième modèle d'aligneur intermédiaire.

13. Support non transitoire lisible par ordinateur selon la revendication 11, la restauration dentaire planifiée comprenant un ou plusieurs éléments parmi un remplissage, un matériau de liaison, un placage, une caractéristique d'ajustement de morsure, une incrustation, un onlay, une couronne, une dent prothétique, un pont, une prothèse dentaire et un implant gingival.

14. Système de traitement ortho-restauratif comprenant :
une série d'aligneurs configurés pour mettre en œuvre un plan de traitement ortho-restauratif sur la dentition d'un patient, la série d'aligneurs comprenant :
un premier aligneur comportant des parois configurées pour appliquer une première force de repositionnement sur une ou plusieurs dents (100, 150, 200, 250, 300, 350) de la dentition du patient conformément à
une première étape du plan de traitement ortho-restauratif, le premier aligneur comprenant une première caractéristique restaurative intermédiaire (102(1-3), 156(1-3), 202, 252, 302, 352), lorsque le premier aligneur est porté, une première caractéristique restaurative intermédiaire étant agencée pour être positionnée à un emplacement sur la dentition du patient pour une restauration dentaire planifiée, la première caractéristique restaurative intermédiaire ayant une première taille ; et
un deuxième aligneur présentant des parois configurées pour appliquer une deuxième force de repositionnement sur la ou les dents de la dentition du patient conformément à une deuxième étape du plan de traitement ortho-restauratif, le deuxième aligneur comportant une deuxième caractéristique restaurative intermédiaire (102(1-3), 156(1-3), 202, 252, 302, 352), lorsque le deuxième dispositif d'aligneur est porté, la deuxième caractéristique restaurative intermédiaire étant agencée pour être positionnée à l'emplacement sur la dentition du patient pour la restauration dentaire planifiée, la deuxième caractéristique restaurative intermédiaire ayant une deuxième taille qui est supérieure à la première taille de la première caractéristique restaurative intermédiaire.

15. Système de traitement ortho-restauratif selon la revendication 14, la première caractéristique restaurative intermédiaire ayant une première épaisseur qui est inférieure à une épaisseur de la restauration dentaire planifiée, et la deuxième caractéristique restaurative intermédiaire ayant une deuxième épaisseur qui est supérieure à la première caractéristique restaurative intermédiaire et inférieure à l'épaisseur de la restauration dentaire planifiée, ou la restauration dentaire planifiée étant un placage, un remplissage, un matériau de liaison, une incrustation, un onlay, une couronne, une dent prothétique, une prothèse dentaire, un pont, un implant gingival ou un implant palatal.
